# EUROPÄISCHE PATENTANMELDUNG

(11) **EP 3 431 521 A1**
(43) Veröffentlichungstag der Anmeldung: **23.01.2019**
(21) Anmeldenummer: 17182436.0
(22) Anmeldetag: 20.07.2017
(51) Int. Cl.: C08G 18/79, C08G 18/24

(54) **FARBSTABILE HÄRTERZUSAMMENSETZUNGEN ENTHALTEND POLYISOCYANATE (CYCLO)ALIPHATISCHER DIISOCYANATE**

(71) Anmelder: BASF SE, 67056 Ludwigshafen am Rhein (DE)
(72) Erfinder: Die Erfindernennung liegt noch nicht vor
(74) Vertreter: BASF IP Association

(57) **Zusammenfassung**

Die vorliegende Erfindung betrifft ein neues Verfahren zur Herstellung von in Lösungsmitteln und in Anwesenheit von Lewis-Säuren farbdriftstabilen Polyisocyanaten von (cyclo)aliphatischen Diisocyanaten

## Beschreibung

Die vorliegende Erfindung betrifft neue farbdriftstabile Zusammensetzungen enthaltend Polyisocyanate (cyclo)aliphatischer Diisocyanate, Lewis-saure organische Metallverbindungen, die die Umsetzung von Isocyanatgruppen mit gegenüber Isocyanat reaktiven Gruppen zu beschleunigen vermögen, Lösungsmittel und spezielle höhermolekulare phenolische Antioxidanzien.

US 6376584 B1 beschreibt verschiedene Stabilisatoren zur Verwendung in Polyurethanzusammensetzungen, in denen Polyisocyanate mit Polyolen in Gegenwart von Dibutylzinndilaurat umgesetzt werden. Es beschreibt insbesondere sterisch gehinderte Amine.

Nicht offenbart wird die Stabilisierungsproblematik, die erwächst, wenn man Polyisocyanatzusammensetzungen lagert, insbesondere nicht mit einem Katalysator vermischt. Es werden im Text nur die am Markt üblichen niedermolekularen phenolischen Antioxidanzien beschrieben, und nicht die Problematik ihrer Flüchtigkeit.

US 7122588 B2 beschreibt Lacke, u.a. Polyurethanlacke, die mit Estern der hypophosphorigen Säure zur Verbesserung der Langlebigkeit und gegen Verfärbung stabilisiert sind.

Insbesondere nicht offenbart wird die Stabilisierungsproblematik, die erwächst, wenn man Polyisocyanatzusammensetzungen mit einem Katalysator vermischt und lagert. Zudem ist die dort beschriebene Stabilisierung noch nicht ausreichend, so dass weiterhin Bedarf an einer verbesserten Stabilisierung besteht. Nicht beschrieben wird die spezifische Problematik der Flüchtigkeit von Additiven.

DE 19630903 beschreibt die Stabilisierung von Isocyanaten mit Hilfe von verschiedenen Phosphorverbindungen und lonol (BHT).

Nicht beschrieben wird jeweils die Anwesenheit von Katalysatoren für die Reaktion zwischen Isocyanatgruppen und dagegen reaktive Gruppen. BHT hat aufgrund seiner kleinen Molmasse u.A. ein Migrations-, Emissions- und Fogging-Problem.

WO 2005/089085 beschreibt Polyisocyanatzusammensetzungen als Härter für 2K-Polyurethanlacke, die neben einem Katalysator für die Reaktion zwischen Isocyanat-gruppen und dagegen reaktiven Gruppen eine Stabilisatormischung enthält, ausgewählt aus sterisch gehinderten Phenolen und sekundären Arylaminen sowie Trialkyl- und Triarylphosphiten, insbesondere Trialkylphosphiten. Explizit offenbart werden in den Beispielen Polyisocyanatzusammensetzungen, bestehend aus Isocyanurat Tolonate HDT, Dibutylzinndilaurat als Katalysator, Butylacetat/ Methylamylketon/ Xylol = 1:1:0,5 als Lösungsmittel und Additive.

Als sterisch gehinderte Phenole genannt sind 2,4-Dimethyl-6-butyl-phenol, 4,4'-Methylen-bis-(2,6-di-tert-butylphenol), 2,6-Di-tert-butyl-N,N'-dimethylamino-p-cresol, butyliertes Hydroxyanisol, 2,6-Di-tert-butylphenol, 2,4,6-Tri-tert-butyl-phenol, 2-Tert-butylphenol, 2,6-Di-isopropyl-phenol, 2-Methyl-6-tert-butyl-phenol, 2,4-Dimethyl-6-tert-butyl-phenol, 4-(N, N-di-methyl-amino-methyl)-2,8-di-tert-butyl-phenol, 4-Ethyl-2,6-di-tert-butyl-phenol.
In den Beispielen wird durchgängig BHT (3,5-Bis-tert-butyl-4-hydroxy-toluol) in Kombination mit den aliphatischen Phosphiten Tributylphosphit und Tri-(iso-octyl)-phosphit genannt.

Nachteilig an den genannten sterisch gehinderten Phenolen ist, dass sie kleine Molmassen haben, die im Lack zu Problemen führen können. Das zweikernige sterisch gehinderten Phenol 4,4'-Methylen-bis-(2,6-di-tert-butylphenol) hat eine Molmasse von 424 g/mol, das größte einkernige Phenol, 2,4,6-Tri-tert-butyl-phenol, eine von 262 g/mol, BHT eine von 220 g/mol. Zu kleine Molmassen, insbesondere die des BHT, führen zu Migration, ggf. zu Ausblühungen, durch höhere Flüchtigkeit zu Emissionen, und Fogging. Fogging-Beschlag ist insbesondere in Innenanwendungen unerwünscht, z.B. bei Automobilen.

BHT führt in Kombination mit NOX (Gasofen, Abgas von Gabelstablern) zur Gelb- oder Pink-Färbung. BHT ist als wassergefährdend (N; R51-53) toxikologisch nicht bevorzugt. BHT gilt als Hauptverursacher von Fogging in Automobilinnenanwendungen.

Die in den Patentschriften WO 2008/116893, WO 2008/116894, WO 2008/116895 beschriebenen Produktmischungen enthalten Polyisocyanat, Lewis-Säure, sekundäres Antioxidanz wie Thioether (WO 2008/116893), Phosphonit (WO 2008/116895) oder Phosphonat (WO 2008/116894), und optional sterisch gehindertes Phenol, saure Stabilisatoren und lacktypische Additive. Das Phenol wird als Verbindung beschrieben, die pro aromatischen Ring genau eine phenolische Hydroxygruppe aufweist und in der mindestens eine, bevorzugt beide ortho-Positionen bezogen auf die funktionelle Gruppe eine tert-Butyl-Gruppe trägt. Solche sterisch gehinderten Phenole können auch Bestandteile eines polyphenolischen Systems mit mehreren Phenol-Gruppen sein wie Pentaerythrit-tetrakis-[ß-(3,5,-di-tert-butyl-4-hydroxyphenyl)-propionat] (z.B. Irganox® 1010), 3,3',3",5,5',5"-Hexa-tert-butyl-,α, α', α"-(mesitylen-2,4,6-triyl)tri-p-kresol (z.B. Irganox® 1330), 1,3,5-tris(3,5-di-tert-butyl-4-hydroxybenzyl)-1 ,3,5-triazin-2,4,6(1 H,3H,5H)-trion (z.B. Irganox® 3114), jeweils Produkte der BASF SE.
In den Beispielen explizit genannt wird Benzolpropionsäure-3,5-bis(1,1-dimethyl-ethyl)-4-hydroxy-C7-C9-verzweigter Alkylester (Irganox® 1135 der BASF SE). Dieses weist gegenüber BHT den Vorteil auf flüssig und damit besser in Polyisocyanate einarbeitbar zu sein, und hat eine höhere Molmasse von 399 g/mol. Damit ist die Molmasse aber immer noch nicht ausreichend in Bezug auf mögliches Fogging.

Die WO 2013/060614 beschreibt analog Polyisocyanatzusammensetzungen, enthaltend Polyisocyanat, Lewis-saure organische Metallverbindung, die die Umsetzung von Isocyanatgruppen mit gegenüber Isocyanat reaktiven Gruppen zu beschleunigen vermag, eine Brønsted-Säure mit einem pKs-Wert kleiner 4, sterisch gehindertes Phenol, Lösungsmittel, gegebenenfalls lacktypische Additive.
Hier gelten die gleichen Einschränkungen wie in den Vorgängerschriften.

EP 1558675 B1 beschreibt die Herstellung und Anwendung von sterisch gehinderten Phenolen mit Farbzahlen unter 100 Hz. Dabei handelt es sich um folgende Strukturen:

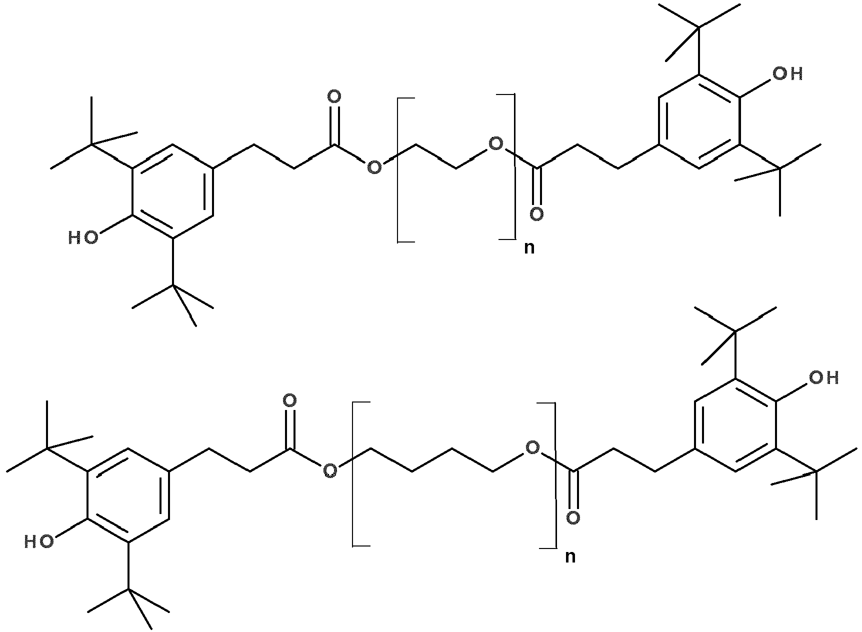

Nach Anspruch 8 der EP 1558675 B1 kann der Polyether eine Molmasse von 120 - 3000 g/mol besitzen, also die beiden genannten Verbindungstypen eine Molmasse von 640 - 3520 g/mol haben. Eine Beimischung dieser Stabilisatoren zu einem (cyc-lo)aliphatischen Polyisocyanat nicht genannt. Dementsprechend wird weder eine Lagerung der Isocyanate mit Stabilisator, oder eine Lagerung von Isocyanat mit Stabilisator in Gegenwart von Lewis-Säuren benannt.

US 20060167207 beschreibt Mischungen von monomeren Isocyanaten und Stabilisatoren mit einer Molmasse von 600-10000 g/mol, bevorzugt 700-900 g/mol mit wenigstens zwei phenolischen Gruppen. Als Isocyanate genannt sind monomeres Toluylendüsocyanat TDI und Methylen-diphenyl-di-isocyanat MDI.

Das Patent enthält keinen Hinweis auf eine Stabilisierung aliphatischer Polyisocyanate, insbesondere nicht in Gegenwart von Lewis-Säuren.

Die Aufgabe der vorliegenden Erfindung bestand darin, lagerstabile aliphatische Polyisocyanatzusammensetzungen bereitzustellen, die farbstabil sind, deren Stabilisierungsmittel gut in Polyisocyanate einarbeitbar sind und bei der Verarbeitung, während und nach der Applikation vom Geruch, ihrer Toxikologie, Migration und/oder Fogging unproblematische Arbeits- und Gesundheitshygiene erlauben und deren Stabilisierungswirkung gegenüber dem Stand der Technik verbessert ist.

Die Aufgabe wurde gelöst durch Polyisocyanatzusammensetzungen, enthaltend
- (A) mindestens ein (cyclo)aliphatisches Polyisocyanat, erhältlich durch Umsetzung mindestens eines monomeren Isocyanats,
- (B) mindestens ein sterisch gehindertes Phenol mit einem Schmelzpunkt von unter 40 °C und einem zahlenmittleren Molekulargewicht Mₙ zwischen 650 und 2550 g/mol, enthaltend mindestens zwei phenolische Gruppen,
- (C) mindestens eine Lewis-saure organische Metallverbindung, die die Umsetzung von Isocyanatgruppen mit gegenüber Isocyanat reaktiven Gruppen zu beschleunigen vermag,
- (D) mindestens ein Lösungsmittel,
- (E) gegebenenfalls mindestens eine weiteres Antioxidanz,
- (F) gegebenenfalls mindestens eine Brønsted-Säure mit einem pKs-Wert kleiner 4,
- (G) gegebenenfalls andere lacktypische Additive.

Derartige Polyisocyanatzusammensetzungen weisen eine gute Farbstabilität über den zeitlichen Verlauf in einer Lagerung auf ("Farbdrift") und können mit Komponenten, die gegenüber Isocyanat reaktive Gruppen enthalten, in Polyurethanlacken umgesetzt werden.

Die eingesetzten monomeren Isocyanate können aliphatisch oder cycloaliphatisch sein, was in dieser Schrift kurz als (cyclo)aliphatisch bezeichnet wird. Besonders bevorzugt sind aliphatische Isocyanate.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Bei den monomeren Isocyanaten handelt es sich bevorzugt um Diisocyanate, die genau zwei Isocyanatgruppen tragen.

Es kommen prinzipiell auch höhere monomere Isocyanate mit im Mittel mehr als zwei Isocyanatgruppen in Betracht. Dafür eignen sich beispielsweise Triisocyanate wie Triisocyanatononan und 2'-Isocyanatoethyl-(2,6-diisocyanatohexanoat).

Diese monomeren Isocyanate weisen keine wesentlichen Umsetzungsprodukte der Isocyanatgruppen mit sich selbst auf.

Bei den monomeren Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanats, (z.B. Methyl- oder Ethyl-2,6-diisocyanatohexanoat),Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-Isomerengemische.

Besonders bevorzugt sind 1,6-Hexamethylendiisocyanat, 1,5-Pentamethylendiisocyanat, 1,3-Bis(isocyanatomethyl)cyclo-hexan, Isophorondiisocyanat und 4,4'- oder 2,4'-Di(isocyanatocyclohexyl)methan, ganz besonders bevorzugt sind Isophorondiisocyanat und 1,6-Hexamethylendiisocyanat, insbesondere bevorzugt ist 1,6-Hexamethylendiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 90:10 (w/w), bevorzugt von 70:30-90:10.

Dicyclohexylmethan-4,4'-diisocyanat kann ebenfalls als Gemisch der verschiedenen cis- und trans-Isomere vorliegen.

Für die vorliegende Erfindung können sowohl solche Diisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) können beispielsweise (cyc-lo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethylcyclohexan (Isophorondiisocyanat bzw. IPDI) hergestellt werden durch Umsetzung der (cyclo)aliphatischen Diamine mit beispielsweise Harnstoff und Alkoholen zu (cyc-lo)aliphatischen Biscarbaminsäureestern und deren thermische Spaltung in die entsprechenden Diisocyanate und Alkohole. Die Synthese erfolgt meist kontinuierlich in einem Kreislaufverfahren und optional in Gegenwart von N-unsubstituierten Carbaminsäureestern, Dialkylcarbonaten und anderen aus dem Reaktionsprozess zurückgeführten Nebenprodukten. So erhaltene Diisocyanate weisen in der Regel einen sehr geringen oder sogar nicht messbaren Anteil an chlorierten Verbindungen auf, was beispielsweise in Anwendungen in der Elektronikindustrie vorteilhaft ist.

In einer Ausführungsform der vorliegenden Erfindung weisen die eingesetzten Isocyanate an hydrolysierbarem Chlor weniger als 100 ppm auf, bevorzugt weniger als 50 ppm, insbesondere weniger als 30 ppm und speziell weniger als 20 ppm. Dies kann beispielsweise durch die ASTM-Vorschrift D4663-98 gemessen werden. Die Gehalte an gesamtem Chlor liegen beispielsweise bei unter 1000 ppm, bevorzugt unter 800 ppm und besonders bevorzugt unter 500 ppm (ermittelt per argentometrischer Titration nach Hydrolyse).

Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Die Polyisocyanate (A), zu denen die monomeren Isocyanate oligomerisiert werden können, sind in der Regel wie folgt charakterisiert:
Die mittlere NCO Funktionalität solcher Verbindungen beträgt in der Regel mindestens 1,8 und kann bis zu 8 betragen, bevorzugt 2 bis 5 und besonders bevorzugt 2,4 bis 4.

Der Gehalt an Isocyanatgruppen nach der Oligomerisierung, berechnet als NCO = 42 g/mol, beträgt, wenn nicht anders angegeben, in der Regel von 5 bis 25 Gew%, bevorzugt 15 bis 24 Gew%.

Bevorzugt handelt es sich bei den Polyisocyanaten (A) um folgende Verbindungen:
1) Isocyanuratgruppen aufweisende Polyisocyanate von aliphatischen und/oder cycloaliphatischen Diisocyanaten. Besonders bevorzugt sind hierbei Diisocyanate auf Basis von Hexamethylendiisocyanat und Isophorondiisocyanat. Bei den dabei vorliegenden Isocyanuraten handelt es sich insbesondere um Trisisocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im Allgemeinen einen NCO-Gehalt von 10 bis 30 Gew.-%, insbesondere 15 bis 25 Gew.-% und eine mittlere NCO-Funktionalität von 2,6 bis 8.
   Die Isocyanuratgruppen aufweisenden Polyisocyanate können in geringerem Umfang auch Allophanat-und/oder Urethangruppen enthalten, bevorzugt mit einem Gehalt gebundenen Alkohols von kleiner 2 % bezogen auf das Polyisocyanat.
2) Uretdiongruppen aufweisende Polyisocyanate mit aliphatisch und/oder cycloaliphatisch gebundenen Isocyanatgruppen, insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiongruppen aufweisenden Polyisocyanate werden häufig im Gemisch mit anderen Polyisocyanaten, insbesondere den unter 1) genannten, erhalten. Uretdiongruppen aufweisende Polyisocyanate weisen üblicherweise Funktionalitäten von 2 bis 3 auf.
   Dies umfasst auch Uretdion-/Isocyanurat-Gemische beliebiger Zusammensetzung, insbesondere mit einem Gehalt an monomerem Uretdion (Dimer) von 1-40%, insbesondere 3-15, insbesondere 5-10 %.
   Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppen-haltigen Produkten umgesetzt werden.
3) Biuretgruppen aufweisende Polyisocyanate mit cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im Allgemeinen einen NCO-Gehalt von 18 bis 24 Gew.-% und eine mittlere NCO-Funktionalität von 2,8 bis 6 auf.
4) Allophanat- und/oder Urethangruppen aufweisende Polyisocyanate mit aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen entstehen. Diese Allophanat- und/oder Urethangruppen aufweisenden Polyisocyanate haben im Allgemeinen einen NCO-Gehalt von 12 bis 24 Gew.-% und eine mittlere NCO-Funktionalität von 2,0 bis 4,5. Solche Allophanat- und/oder Urethangruppen aufweisenden Polyisocyanate können unkatalysiert oder bevorzugt in Gegenwart von Katalysatoren, wie beispielsweise Ammoniumcarboxylaten oder-hydroxiden, oder Allophanatisierungskatalysatoren, z.B. Wismut-, Kobalt-, Cäsium-, Zn-(II)- oder Zr-(IV)-Verbindungen, jeweils in Anwesenheit von ein-, zwei- oder mehrwertigen, bevorzugt einwertigen Alkoholen, hergestellt werden.
   Diese Allophanat- und/oder Urethangruppen aufweisenden Polyisocyanate treten häufig in Mischformen mit den unter 1) genannten Polyisocyanaten auf.
5) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren, z.B. Phosphonium-hydrogen-difluorid, herstellbar.
6) Carbodiimid-modifizierte Polyisocyanate.
7) Hyperverzweigte Polyisocyanate, wie sie beispielsweise bekannt sind aus der DE-A1 10013186 oder DE-A1 10013187.
8) Polyurethan-Polyisocyanat-Präpolymere, aus Di- und/oder Polyisocyanaten mit Alkoholen.
9) Polyharnstoff-Polyisocyanat-Präpolymere.
10) Die Polyisocyanate 1) - 9), bevorzugt 1), 3), 4) und 5) können nach deren Herstellung in Biuretgruppen- oder Allophanat/Urethan-Gruppen aufweisende Polyisocyanate mit cycloaliphatisch oder aliphatisch gebundenen Isocyanatgruppen, überführt werden. Die Bildung von Biuretgruppen erfolgt beispielsweise durch Zugabe von Wasser oder Umsetzung mit Aminen. Die Bildung von Allophanat-/Urethangruppen erfolgt durch Umsetzung mit ein-, zwei- oder mehrwertigen, bevorzugt einwertigen Alkoholen, optional in Gegenwart von geeigneten Katalysatoren. Diese Biuret- oder Allophanat-/Urethangruppen aufweisenden Polyisocyanate weisen im Allgemeinen einen NCO-Gehalt von 10 bis 25 Gew.-% und eine mittlere NCO-Funktionalität von 3 bis 8 auf.
11) Hydrophil modifizierte Polyisocyanate, d.h. Polyisocyanate, die neben den unter 1) - 10) beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei Letzteren handelt es sich um nichtionische Gruppen wie Alkyl-Polyethylenoxid und/oder ionische, welche von Phosphorsäure, Phosphonsäure, Schwefelsäure oder Sulfonsäure, bzw. ihren Salzen abgeleitet sind.
12) Modifizierte Polyisocyanate für Dual Cure Anwendungen, d.h. Polyisocyanate, die neben den unter 1) - 9) beschriebenen Gruppen solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Molekülen handelt es sich beispielsweise um Hydroxyalkyl(meth)acrylate und andere Hydroxy-Vinylverbindungen.

Die oben aufgeführten Diisocyanate oder Polyisocyanate können auch zumindest teilweise in blockierter Form vorliegen.

Zur Blockierung eingesetzte Verbindungsklassen sind beschrieben in D. A. Wicks, Z. W. Wicks, Progress in Organic Coatings, 36, 148-172 (1999), 41, 1-83 (2001) sowie 43, 131-140 (2001).

Beispiele für zur Blockierung eingesetzte Verbindungsklassen sind Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate.

In einer bevorzugten Ausführungsform der vorliegenden Erfindung ist das Polyisocyanat ausgewählt aus der Gruppe bestehend aus Isocyanuraten, Biureten, Allophanat- / (Urethan-) / Isocyanurat-Mischungen, asymmetrischen Isocyanuraten, bevorzugt aus der Gruppe bestehend aus Isocyanuraten, Allophanat- / (Urethan-) / Isocyanurat-Mischungen, besonders bevorzugt handelt es sich um ein isocyanuratgruppenhaltiges Polyisocyanat.

In einer besonders bevorzugten Ausführungsform handelt es sich bei dem Polyisocyanat um Isocyanuratgruppen enthaltende Polyisocyanate von 1,6-Hexamethylendiisocyanat.

In einer weiteren bevorzugten Ausführungsform handelt es sich bei dem Polyisocyanat um ein Gemisch von Isocyanuratgruppen enthaltenden Polyisocyanaten, ganz besonders bevorzugt von 1,6-Hexamethylendiisocyanat und von Isophorondiisocyanat.

In einer besonders bevorzugten Ausführungsform handelt es sich bei dem Polyisocyanat um ein Gemisch enthaltend niedrigviskose Polyisocyanate, bevorzugt Isocyanuratgruppen enthaltende Polyisocyanate wie unter 1) beschrieben, mit einer Viskosität von 600-1500 mPa*s, insbesondere unter 1200 mPa*s, niederviskose Allophanate (Allophanat-/Urethan-/Isocyanurat-Mischungen) wie unter 4) beschrieben mit einer Viskosität von 200-1600 mPa*s, insbesondere 600-1500 mPa*s, und/oder Iminooxadiazindiongruppen wie unter 5) beschrieben enthaltende Polyisocyanate.

In dieser Schrift wird die Viskosität bei 23 °C gemäß DIN EN ISO 3219/A.3 in einem Kegel-Platte-System mit einem Geschwindigkeitsgefälle von 1000 s⁻¹ angegeben, falls nicht anders vermerkt.

Das Verfahren zur Herstellung der Polyisocyanate kann erfolgen, wie in WO 2008 / 68198 beschrieben, dort besonders von Seite 20, Zeile 21 bis Seite 27, Zeile15, was hiermit durch Bezugnahme Bestandteil der vorliegenden Anmeldung sei.

Die Reaktion kann beispielsweise abgebrochen werden, wie dort von Seite 31, Zeile 19 bis Seite 31, Zeile 31 beschrieben und die Aufarbeitung erfolgen wie dort beschrieben von Seite 31, Zeile 33 bis Seite 32, Zeile 40, was hiermit jeweils durch Bezugnahme Bestandteil der vorliegenden Anmeldung sei.

Die Reaktion kann alternativ und bevorzugt erfolgen wie in der WO 2005 / 087828 für Ammonium-alpha-hydroxycarboxylat-Katalysatoren beschrieben. Die Reaktion kann beispielsweise abgebrochen werden, wie dort von Seite 11, Zeile 12 bis Seite 12, Zeile 5 beschrieben, was hiermit durch Bezugnahme Bestandteil der vorliegenden Anmeldung sei.

Die Reaktion kann alternativ wie in der CN 10178994A oder CN 101805304 beschrieben erfolgen.

Bei thermisch labilen Katalysatoren ist es weiterhin auch möglich, die Reaktion durch Erhitzen des Reaktionsgemischs auf eine Temperatur oberhalb von mindestens 80°C, bevorzugt mindestens 100 °C, besonders bevorzugt mindestens 120 °C abzubrechen. Dafür reicht in der Regel bereits die Erwärmung des Reaktionsgemischs, wie sie zur Abtrennung des unumgesetzten Isocyanats durch Destillation in der Aufarbeitung erforderlich ist.

Sowohl bei thermisch nicht-labilen als auch bei thermisch labilen Katalysatoren besteht die Möglichkeit, durch Zugabe von Deaktivatoren die Reaktion bei niedrigeren Temperaturen abzubrechen. Geeignete Deaktivatoren sind beispielsweise Chlorwasserstoff, Phosphorsäure, organische Phosphate, wie Dibutylphosphat oder Diethylhexylphosphat, und Carbamate wie Hydroxyalkylcarbamat.

Diese Verbindungen werden pur oder verdünnt in geeigneter Konzentration, die zum Reaktionsabbruch erforderlich ist, zugegeben.

Sterisch gehinderte Phenole (B) haben im Sinne der Erfindung die Funktion eines primären Antioxidanz. Darunter werden vom Fachmann üblicherweise Verbindungen verstanden, die Radikale abfangen.

Die Phenole (B) weisen einen Schmelzpunkt von unter 40 °C auf, haben ein zahlenmittleres Molekulargewicht Mₙ zwischen 650 und 2550, bevorzugt 650 bis 2000, besonders bevorzugt 700 bis 1500, ganz besonders bevorzugt 700 bis 1000 g/mol (zahlenmittleres Molekulargewicht Mₙ, gemessen über GPC gegenüber Polystyrol-Standards in THF bei (23±1) °C), und enthalten mindestens zwei phenolische Gruppen.

Hier und bei den folgenden gilt bei Molekulargewichtangaben, dass sie bestimmt sind durch Gelpermeationschromatographie (GPC) gegenüber Polystyrol-Standard in Tetrahydrofuran bei (23±1) °C.

Besonders bevorzugt haben die Phenole (B) eine enge Molekulargewichtsverteilung, d.h. eine Polydispersität (PD = Mw/Mn) von 1,0 bis 1,5, besonders bevorzugt von 1,0 bis 1,2.

Der Schmelzpunkt liegt bevorzugt unterhalb von 30 °C, besonders bevorzugt unterhalb 23 °C, insbesondere unter 5 °C.

Die Phenole (B) weisen bevorzugt pro aromatischem Ring genau eine phenolische Hydroxygruppe auf, wobei beide ortho-Positionen bezogen auf die phenolische Hydroxygruppe mit Alkyl-Resten substituiert sind, bevorzugt mit C₁-C₁₀ Alkyl, besonders bevorzugt mit C₄-C₆ Alkyl, ganz besonders bevorzugt mit sec-Butyl, tert-Butyl oder tert-Amyl, und insbesondere in beiden ortho-Positionen mit tert-Butyl.

Die Phenole (B) weisen bevorzugt die folgende Struktur eines Polyalkylenoxid-bis-/tri oder -/tetra-[3-(3,5-di-alkyl-4-hydroxyphenyl)-propionat] auf, 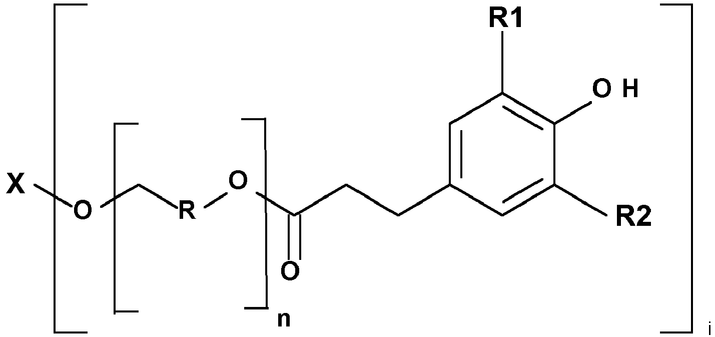 wobei
**R** ein gegebenenfalls substituierter C₁-C₅-Alkylrest ist, der linear oder verzweigt ist und von Repetiereinheit [-CH₂-R-O-] zu Repetiereinheit [-CH₂-R-O-] unterschiedlich sein kann, bevorzugt ausgewählt aus R = -CH₂-, -(CH₂)₂, -CH(CH₃)- und -(CH₂)₃-, besonders bevorzugt mit R in jeder Repetiereinheit gleich, insbesondere bevorzugt mit R = - CH₂- oder ausgewählt aus -(CH₂)₂- und -CH(CH₃)- oder ausgewählt aus -CH₂-, -(CH₂)₂- und -CH(CH₃)-;
i eine ganze Zahl zwischen 2 und 4 ist;
n eine natürliche Zahl (inklusive 0) ist, wobei die 2, 3 oder 4 n pro Verbindung (B) gleich oder verschieden seien können, und wobei die Summe der 2, 3 oder 4 n, in der Verbindung (B) im Mittel über alle Moleküle (B) größer als 2 und maximal 45 ist;
**R1**, **R2** gleiche oder verschiedene Alkylgruppen sind, bevorzugt C₁-C₁₀ Alkylgruppen, besonders bevorzugt C₄-C₆ Alkylgruppen, ganz besonders bevorzugt sec.-Butylgruppen, tert-Butylgruppen oder tert-Amylgruppen, und insbesondere tert-Butylgruppen, wobei die 2, 3 oder 4 R1 und R2 pro Verbindung (B) gleich oder verschieden sein können
   und
X ein aliphatischer di-, tri- oder tetrafunktioneller aliphatischer linearer oder verzweigter Rest ist.

Der difunktionelle Rest X ist bevorzugt ein C₁-C₆, besonders bevorzugt Ethylen -(CH₂)₂-, Propylen -(CH₂-)₃- und/oder -(CH₂-CH(CH₃))-, ganz besonders bevorzugt Ethylen - (CH₂)₂-. Der trifunktionelle Rest ist bevorzugt abgeleitet von Trimethylolpropan oder Glycerin (d.h. der aliphatische Rest ohne die OH-Gruppen). Der tetrafunktionelle Rest ist bevorzugt abgeleitet von Pentaerythrol.

Die Phenole (B) können auf Basis eines gegebenenfalls polyalkoxylierten Di-, Tri- oder Tetra-Alkohols mit anschließender Ver-/Umesterung mit 3-(3,5-di-alkyl-4-hydroxyphenyl)-propionsäuren oder ihren Derivaten umgesetzt werden, beispielsweise unter Entfernung von Methanol mit dem 3-(3,5-di-tert-butyl-4-hydroxyphenyl)-propionsäure-methylester.

Besonders bevorzugt weisen die Phenole (B) folgende Struktur eines Polyalkylenoxid-bis-[3-(3,5-alkyl-4-hydroxyphenyl)-propionat] auf: 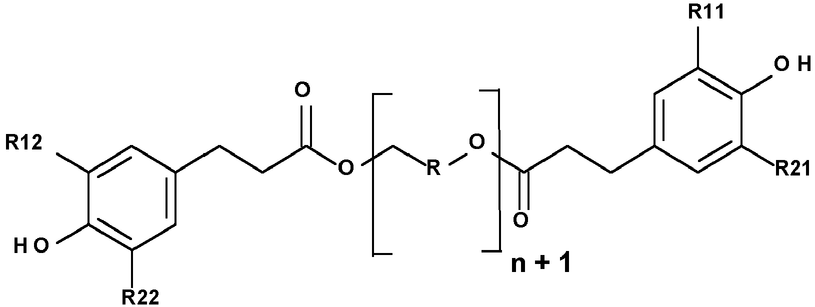 wobei
**R** ein gegebenenfalls substituierter C₁-C₅-Alkylrest ist, der linear oder verzweigt ist und von Repetiereinheit [-CH₂-R-O-] zu Repetiereinheit [-CH₂-R-O-] unterschiedlich sein kann, bevorzugt ausgewählt aus R = -CH₂-, -(CH₂)₂, -CH(CH₃)-, und -(CH₂)₃- (letzteres abgeleitet von Poly-THF, insbesondere einer Molmasse von ca. 250, 650, 1000, 1800 oder 2000 g/mol), besonders bevorzugt mit R in jeder Repetiereinheit gleich, insbesondere bevorzugt mit R = -CH₂- oder ausgewählt aus -(CH₂)₂- und -CH(CH₃)- oder ausgewählt aus -CH₂-, -(CH₂)₂- oder -CH(CH₃)-;
**n** eine natürliche Zahl ist, wobei (n + 1) in der Verbindung (**B**) im Mittel über alle Moleküle (**B**) größer als 3 und maximal 46 ist;
   und
**R11**, **R21**, **R12** und **R22** gleiche oder verschiedene Alkylgruppen sind, bevorzugt C₁-C₁₀ Alkylgruppen, besonders bevorzugt C₄-C₆ Alkylgruppen, ganz besonders bevorzugt sec.-Butylgruppen, tert-Butylgruppen oder tert-Amylgruppen, und insbesondere tert-Butylgruppen.

In einer bevorzugten Variante ist die Verbindung (**B**) ein Polymer nach der OECD-Definition.

Die Herstellung entsprechender Verbindungen ist z.B. beschrieben unter EP 1303565 B1, Beispiel 3, (Polyethylenoxid-Basis mit niedriger Farbzahl), EP 1558675 B1, EP 1529814, US 20060167207, was hiermit per Bezugnahme Bestandteil der vorliegenden Offenbarung ist.

Die sterisch gehinderten Phenole (B) haben bevorzugt eine Farbzahl von unter 100 Hz, besonders bevorzugt von unter 50 Hz, ganz besonders bevorzugt von unter 20 Hz.

Die sterisch gehinderten Phenole (B) werden üblicherweise in Mengen bezogen auf das Polyisocyanat (A) von 100 bis 10000 Gew.ppm, bevorzugt 200 bis 5000, besonders bevorzugt 250 bis 3000 Gew.ppm, ganz besonders bevorzugt 300 bis 1500 Gew.ppm zugesetzt.

Als Lewis-saure organische Metallverbindungen (**C**) kommen z.B. Zinnverbindungen in Frage, wie beispielsweise Zinn-(11)-salze von organischen Carbonsäuren, z.B. Zinn-(II)-diacetat, Zinn-(II)-dioctoat, Zinn-(II)-bis(ethylhexanoat) und Zinn-(II)-dilaurat und die Dialkylzinn-(IV)-salze von organischen Carbonsäuren, z.B. Dimethylzinn-diacetat, Dibutylzinn-diacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat.

Weitere bevorzugte Lewis-saure organische Metallverbindungen sind Zinksalze, beispielsweise Zink-(II)-diacetat und Zink-(II)-dioctoat.

Als Zinn- und Zink-freie Alternativen werden u.a. organische Metallsalze des Wismuts, Zirkons, Titans, Aluminiums, Eisens, Mangans, Nickels und Cobalts eingesetzt.

Dies sind z.B. Zirkoniumtetraacetylacetonat (z.B. K-KAT® 4205 der Firma King Industries); Zirkoniumdionate (z.B. K-KAT® XC-9213; XC-A 209 und XC-6212 der Firma King Industries); Wismut-Verbindungen, insbesondere Tricarboxylate (z.B. K-KAT® 348, XC-B221; XC-C227, XC 8203 der Firma King Industries); Aluminiumdionat (z.B. K-KAT® 5218 der Firma King Industries). Zinn- und Zink-freie Katalysatoren werden ansonsten z.B. auch unter dem Handelsnamen Borchi® Kat der Firma Borchers, Tego® der Firma Evonik, TIB Kat® der Fa. TIB Chemicals oder BICAT® der Firma Shepherd, Lausanne angeboten.

Auch Bismut- und Kobalt-Katalysatoren, Cer-Salze wie Ceroctoate, und Cäsiumsalze können als Katalysatoren eingesetzt werden.
Bismut-Katalysatoren sind insbesondere Bismut-carboxylate, insbesondere Bismutoctoate, -ethylhexanoate, -neodecanoate, oder -pivalate; beispielsweise K-KAT® 348 und XK-601 von King Industries, TIB KAT® 716, 716LA, 716XLA, 718, 720, 789 von TIB Chemicals und solchen von Shepherd Lausanne, sowie Katalysator-Mischungen von z.B. Bismut- und Zink-Organylen.

Weitere Metallkatalysatoren werden von Blank et al. in Progress in Organic Coatings, 1999, Vol. 35, Seiten 19-29 beschrieben.

Diese Katalysatoren sind für lösungsmittel-, wasser-basierte und/oder blockierte Systeme geeignet.

Molybdän-, Wolfram- und Vanadium-Katalysatoren, werden insbesondere für den Umsatz blockierter Polyisocyanate unter WO 2004/076519 und WO 2004/076520 beschrieben.

Auch Cäsiumsalze können als Katalysatoren eingesetzt werden. Als Cäsiumsalze kommen dabei solche Verbindungen in Betracht, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht. Bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Format, Acetat, Propionat, Hexanoat und 2-Ethylhexanoat.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Dioctylzinn-dilaurat, Zink-(II)-diacetat, Zink-(II)-dioctoat, Zirkon-Acetylacetonat und Zirkon-2,2,6,6-tetramethyl-3,5-heptandionat und Wismut-Verbindungen.

Besonders bevorzugt ist Dibutylzinndilaurat.

Des Weiteren ist noch ein Lösungsmittel oder Lösungsmittelgemisch (D) anwesend.

Als Lösungsmittel für die Polyisocyanatkomponente, wie auch die Bindemittel- und ggf. weitere Komponenten einsetzbar sind solche, die keine gegenüber Isocyanatgruppen oder verkappten Isocyanatgruppen reaktiven Gruppen aufweisen und in denen die Polyisocyanate zu mindestens 10 Gew%, bevorzugt zu mindestens 25, besonders bevorzugt zu mindestens 50, ganz besonders bevorzugt zu mindestens 75, insbesondere zu mindestens 90 und speziell zu mindestens 95 Gew% löslich sind.

Beispiele für derartige Lösungsmittel sind aromatische (einschließlich alkylierter Benzole und Naphthaline) und/oder (cyclo)aliphatische Kohlenwasserstoffe und deren Gemische, Ketone, Ester, alkoxylierte Alkansäurealkylester, Ether, Etherester, respektive Gemische der Lösungsmittel.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell, Caromax® (z.B. Caromax® 18) der Firma Petrochem Carless und Hydrosol® der Firma DHC (z.B. als Hydrosol® A 170). Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen.

Der Gehalt an aliphatischen Kohlenwasserstoffen beträgt in der Regel weniger als 5, bevorzugt weniger als 2,5 und besonders bevorzugt weniger als 1 Gew%.

Ester sind beispielsweise n-Butylacetat, iso-Butylacetat, Ethylacetat, 1-Methoxypropylacetat-2 und 2-Methoxyethylacetat.

Ether sind beispielsweise Dioxan sowie die Dimethyl-, -ethyl- oder -n-butylether von Ethylenglykol, Diethylenglykol, Triethylenglykol, Propylenglykol, Dipropylenglykol oder Tripropylenglykol.

Ketone sind beispielsweise Aceton, Diethylketon, Ethylmethylketon, Isobutylmethylketon, Methylamylketon, Cyclohexanon und tert-Butylmethylketon.

Etherester sind beispielsweise Ethylethoxypropionat EEP, Methoxymethylacetat, Butoxyethylacetat BGA, Ethoxy-1-methylethylacetat, Methoxy-1-methyl-ethylacetat.

Bevorzugte Lösungsmittel sind n-Butylacetat, Ethylacetat, 1-Methoxypropylacetat-2, 2-Methoxyethylacetat, Methylamylketon, sowie deren Gemische, insbesondere mit den oben aufgeführten aromatischen Kohlenwasserstoffgemischen, insbesondere Xylol und Solvesso® 100.
Derartige Gemische können im Volumenverhältnis 5:1 bis 1:5 erstellt werden, bevorzugt im Volumenverhältnis 4:1 bis 1:4, besonders bevorzugt im Volumenverhältnis 3:1 bis 1:3 und ganz besonders bevorzugt im Volumenverhältnis 2:1 bis 1:2.
Bevorzugte Beispiele sind Butylacetat/Xylol, Methoxypropylacetat/Xylol 1:1, Butylacetat/Solventnaphtha 100 1:1, Butylacetat/Solvesso® 100 1:2 und Kristallöl 30/Shellsol® A 3:1.

Es wurde gefunden, dass die Lösungsmittel in Bezug auf die Aufgabenstellung unterschiedlich problematisch sind. Polyisocyanatzusammensetzungen, welche Ketone oder Aromatengemische (beispielsweise Solvent Naphtha-Mischungen) enthalten, sind besonders kritisch in Bezug auf Farbzahlentstehung bei Lagerung. Dagegen sind Ester, Ether, engere Aromatenschnitte wie Xylol und dessen Isomerengemische unproblematischer. Überraschend ist dies insofern, als Xylole analog den Aromatengemischen ebenfalls benzylische Wasserstoff-Atome tragen, die an einer Farbentstehung beteiligt sein könnten. Dazu kommt, dass Solvent Naphtha-Mischungen abhängig von der Bezugsquelle und Lagerzeiten sich bei Einsatz in den Polyisocyanatzusammensetzungen deutlich unterschiedlich auf den Farbzahldrift auswirken können.

Weiterhin können weitere Antioxidanzien (E) anwesend sein.

Weitere primäre Antioxidanzien sind beispielsweise sekundäre Arylamine.

Die sekundären Antioxidantien sind bevorzugt ausgewählt aus der Gruppe bestehend aus Phosphiten, Phosphoniten, Phosphonaten und Thioethern.

Phosphite sind Verbindungen des Typs P(OR^{a})(OR^{b}) (OR^{c}) mit R^{a}, R^{b}, R^{c} als gleichen oder unterschiedlichen aliphatischen oder aromatischen Resten (die auch cyclische oder spiro-Strukturen aufbauen können).

Bevorzugte Phosphonite sind beschrieben in WO 2008/116894, dort besonders von Seite 11, Zeile 8 bis Seite 14, Zeile 8, was hiermit per Bezugnahme Bestandteil der vorliegenden Offenbarung sei.

Bevorzugte Phosphonate sind beschrieben in WO 2008/116895, dort besonders von Seite 10, Zeile 38 bis Seite 12, Zeile 41, was hiermit per Bezugnahme Bestandteil der vorliegenden Offenbarung sei.

Diese sind insbesondere Dialkylphosphonate und Dialkyldiphosphonate.

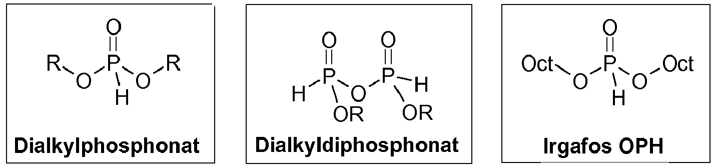

Beispiele dafür sind Mono- und Di-C₁- bis C₁₂-Alkylphosphonate und deren Gemische, bevorzugt die Dialkylphosphonate, besonders bevorzugt solche mit C₁- bis C₈-Alkylgruppen, ganz besonders bevorzugt mit C₁- bis C₈-Alkylgruppen und insbesondere solche mit C₁-, C₂-, C₄- oder C₈-Alkylgruppen.

Die Alkylgruppen in Dialkylphosphonaten können dabei gleich oder verschieden sein, bevorzugt sind sie gleich.

Beispiele für C₁- bis C₁₂-Alkylgruppen sind Methyl, Ethyl, iso-Propyl, n-Propyl, n-Butyl, iso-Butyl, sek-Butyl, tert-Butyl, n-Hexyl, n-Heptyl, n-Octyl, n-Decyl, n-Dodecyl, 2-Ethylhexyl und 2-Propylheptyl, bevorzugt Phosphonsäuredi-n-octylester Irgafos® OPH (s. obige Abbildung), Phosphonsäuredi-n-butylester und Phosphonsäuredi-(2-ethylhexyl)-ester, insbesondere Phosphonsäuredi-n-octylester.
Phosphonsäuren werden in der Regel in Mengen bezogen auf das Polyisocyanat von 10 bis 1000, bevorzugt 20 bis 600, besonders bevorzugt 50 bis 300 Gew.ppm eingesetzt.

Bevorzugte Thioether sind beschrieben in WO 2008/116893, dort besonders von Seite 11, Zeile 1 bis Seite 15, Zeile 37, was hiermit per Bezugnahme Bestandteil der vorliegenden Offenbarung sei.

Brønsted-Säuren (**F**) sind H-acide Verbindungen. Dabei handelt es sich bevorzugt um **F1**) Mono- und/ oder Dialkylphosphate, **F2**) Arylsulfonsäuren und/oder **F3**) Phosphonate.

Mono- und/oder Dialkylphosphate **F1** sind Mono- und Di-C₁- bis C₁₂-Alkylphosphate und deren Gemische, bevorzugt solche mit C₁- bis C₈-Alkylgruppen, ganz besonders bevorzugt mit C₂- bis C₈-Alkylgruppen und insbesondere solche mit C₄- bis C₈-Alkylgruppen.
Die Alkylgruppen in Dialkylphosphaten können dabei gleich oder verschieden sein, bevorzugt sind sie gleich.
Beispiele für C₁- bis C₁₂-Alkylgruppen sind Methyl, Ethyl, iso-Propyl, n-Propyl, n-Butyl, iso-Butyl, sek-Butyl, tert-Butyl, n-Hexyl, n-Heptyl, n-Octyl, n-Decyl, n-Dodecyl, 2-Ethylhexyl und 2-Propylheptyl.
Dies sind insbesondere Mono- und Dialkylphosphate und deren Gemische wie
- Mono-/Di-(ethylhexyl)-phosphat
- Mono-/Dibutylphosphat
- Mono-/Diethylphosphat
Des Weiteren können dies ein:
- Nacure® 4000 (früher Nacure® C 207), einem nicht näher definierten Alkylphosphorsäureester, der Firma King Industries
- Nacure® 4054, einem nicht näher definierten Alkylphosphorsäureester, der Firma King Industries
- Cycat® 296-9, einem nicht näher definierten Alkylphosphorsäureester, der Firma Cytec
Bevorzugt für den Einsatz in Polyisocyanaten ist der Einsatz als 100%-iges Produkt oder in einem Lösungsmittel, welches nicht mit Isocyanat-Gruppen reagiert.
Verbindungen **F1** werden in der Regel in Mengen bezogen auf das Polyisocyanat von 5 bis 1000, bevorzugt 10 bis 600, besonders bevorzugt 20 bis 200, ganz besonders bevorzugt 20 bis 80 Gew.ppm zugesetzt.

Arylsulfonsäuren **F2** sind beispielsweise Benzol- oder Naphthalinderivate, insbesondere alkylierte Benzol oder Naphthalinderivate.
Beispiele bevorzugter Sulfonsäuren umfassen 4-Alkylbenzolsulfonsäuren mit Alkylresten aus 6 bis 12 C-Atomen wie beispielsweise 4-Hexylbenzolsulfonsäure, 4-Octylbenzolsulfonsäure, 4-Decylbenzolsulfonsäure oder 4-Dodecylbenzolsulfonsäure. Hierbei kann es sich in prinzipiell bekannter Art und Weise auch um technische Produkte handeln, welche eine Verteilung verschiedener Alkylreste unterschiedlicher Länge aufweisen.
Als besonders bevorzugte Säuren genannt seien:
- Benzolsulfonsäure
- Para-toluolsulfonsäure
- Para-ethylbenzolsulfonsäure
- Para-dodecylbenzolsulfonsäure
- Bisnonylnaphthalinsulfonsäure
- Bisnonylnaphthalinbissulfonsäure
- Bisdodecylnaphthalinsulfonsäure
- Nacure® XC-C210 (hydrophober Säurekatalysator nicht angegebener Struktur der Firma King Industries)
Verbindungen **F2** werden in der Regel in Mengen bezogen auf das Polyisocyanat von 1 bis 600, bevorzugt 2 bis 100, besonders bevorzugt 5 bis 50 Gew.ppm zugesetzt.

Phosphonate **F3** sind schon unter den Antioxidanzien (**E**) beschrieben worden. Es gilt hier analoges.

Als weitere lacktypische Additive (**G**) können beispielsweise verwendet werden: UV-Stabilisatoren wie UV-Absorber und geeignete Radikalfänger (insbesondere HALS-Verbindungen, Hindered Amin Light Stabilizer), Aktivatoren (Beschleuniger), Trockenmittel, Füllmittel, Pigmente, Farbstoffe, antistatische Agenzien, Flammschutzmittel, Verdicker, thixotrope Agenzien, oberflächenaktive Agenzien, Viskositätsmodifikatoren, Plastifizierer oder Chelatbildner. Bevorzugt sind UV-Stabilisatoren.

Geeignete UV-Absorber umfassen Oxanilide, Triazine und Benzotriazole (letztere erhältlich z.B. als Tinuvin® -Marken der BASF SE) und Benzophenone (z.B. Chimassorb® 81 der BASF SE). Bevorzugt sind z.B. 95 % Benzolpropansäure, 3-(2H-Benzotriazol-2-yl)-5-(1,1-dimethylethyl)-4-hydroxy-, C7-9-verzweigte und lineare Alkylester; 5 % 1-Methoxy-2-propylacetat (z.B. Tinuvin® 384) und α-[3-[3-(2H-Benzotriazot-2-yl)-5-(1,1,-dimethylethyl)-4-hydroxyphenyl]-1-oxopropyt]-ω-hydroxypoly-(oxo-1,2-ethanediyl) (z.B. Tinuvin® 1130), jeweils Produkte z.B. der BASF SE. DL-Alpha-Tocopherol, Tocopherol, Zimtsäurederivate und Cyanoacrylate können ebenfalls zu diesem Zweck eingesetzt werden.

Diese können allein oder zusammen mit geeigneten Radikalfängern, beispielsweise sterisch gehinderten Aminen (oft auch als HALS -oder HAS-Verbindungen bezeichnet; Hindered Amine (Light) Stabilizer) wie 2,2,6,6-Tetramethylpiperidin, 2,6-Di-tert-butylpiperidin oder deren Derivaten, z. B. Bis-(2,2,6,6-tetra-methyl-4-piperidyl)sebacinat, eingesetzt werden. Diese sind z.B. erhältlich als Tinuvin®- und Chimassorb®-Marken der BASF SE. Bevorzugt im gemeinsamen Einsatz mit Lewis-Säuren sind jedoch solche gehinderten Amine, die N-alkyliert sind, beispielsweise Bis (1,2,2,6,6-pentamethyl-4-piperidinyl)-[[3,5-bis(1,1-dimethylethyl)-4-hydroxyphenyl]methyl]butylmalonat (z.B. Tinuvin® 144 der BASF SE); eine Mischung aus Bis(1,2,2,6,6-Pentamethyl-4-Piperidinyl)sebacat und Methyl(1,2,2,6,6-Pentamethyl-4-Piperidinyl)sebacat (z.B. Tinuvin® 292 der BASF SE); oder die N-(O-alkyliert) sind, wie z.B. Dekandisäure-bis-(2,2,6,6-tetramethyl-1-(octyloxy)-4-piperidinyl)-ester, Reaktionsprodukte mit 1,1-Dimethylethylhydroperoxyd und Oktan (z.B. Tinuvin® 123 der BASF SE), und speziell dem HALS-Triazin "2-Aminoethanol, Reaktionsprodukte mit Cyclohexan und peroxidiertem N-butyl-2,2,6,6-tetramethyl-4-piperidinamine-2,4,6-trichloro-1,3,5-triazin Reaktionsprodukt" (z.B. Tinuvin® 152 der BASF SE).

UV-Stabilisatoren werden üblicherweise in Mengen von 0,1 bis 5,0 Gew.-%, bezogen auf die in der Zubereitung enthaltenen festen Komponenten, eingesetzt.

Als Verdicker kommen neben radikalisch (ko)polymerisierten (Ko)Polymeren, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Weiterhin können noch als Komponente (**H**) Füllstoffe, Farbstoffe und/oder Pigmente enthalten sein.

Pigmente im eigentlichen Sinne sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel".

Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium.

Beispiele für Pigmente im eigentlichen Sinne umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepasst werden, beispielsweise wie in Schritt a) beschrieben. Beispielsweise können alle Pigmentkomponenten eines standardisierten Mischlacksystems zugrunde liegen.

Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente; wie z.B. Aluminium-, Eisen- oder Kupferpigmente; Interferenzpigmente, wie z.B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃), metalloxidbeschichtetes Aluminium, oder Flüssigkristallpigmente.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Farbstoffe sind ebenfalls Farbmittel und unterscheiden sich von den Pigmenten durch ihre Löslichkeit im Anwendungsmedium, d.h. sie weisen bei 25 °C eine Löslichkeit über 1 g / 1000 g im Anwendungsmedium auf.

Beispiele für Farbstoffe sind Azo-, Azin-, Anthrachinon-, Acridin-, Cyanin-, Oxazin-, Polymethin-, Thiazin-, Triarylmethan-Farbstoffe. Diese Farbstoffe können Anwendung finden als basische oder kationische Farbstoffe, Beizen-, Direkt-, Dispersions-, Entwicklungs-, Küpen-, Metallkomplex-, Reaktiv-, Säure-, Schwefel-, Kupplungs- oder Substantive Farbstoffe.

Als koloristisch inerte Füllstoffe sind alle Stoffe/Verbindungen zu verstehen, die einerseits koloristisch unwirksam sind; d.h. die eine geringe Eigenabsorption zeigen und deren Brechzahl ähnlich der Brechzahl des Beschichtungsmediums ist, und die andererseits in der Lage sind, die Orientierung (parallele Ausrichtung) der Effektpigmente in der Oberflächenbeschichtung, d.h. im applizierten Lackfilm, zu beeinflussen, ferner Eigenschaften der Beschichtung oder der Beschichtungsmassen, beispielsweise Härte oder Rheologie. Im Folgenden sind beispielhaft einsetzbare inerte Stoffe/Verbindungen genannt, ohne jedoch den Begriff koloristisch inerte topologiebeeinflussende Füllstoffe auf diese Beispiele zu beschränken. Geeignete inerte Füllstoffe entsprechend der Definition können beispielsweise transparente oder semitransparente Füllstoffe oder Pigmente sein, wie z.B. Kieselgele, Blancfixe, Kieselgur, Talkum, Calciumcarbonate, Kaolin, Bariumsulfat, Magnesiumsilikat, Aluminiumsilikat, kristallines Siliziumdioxid, amorphe Kieselsäure, Aluminiumoxid, Mikrokugeln oder Mikrohohlkugeln z.B. aus Glas, Keramik oder Polymeren mit Größen von beispielsweise 0,1-50 µm. Weiterhin können als inerte Füllstoffe beliebige feste inerte organische Partikel, wie z.B. Harnstoff-Formaldehyd-Kondensationsprodukte, mikronisiertes Polyolefinwachs und mikronisiertes Amidwachs, eingesetzt werden. Die inerten Füllstoffe können jeweils auch in Mischung eingesetzt werden. Bevorzugt wird jedoch jeweils nur ein Füllstoff eingesetzt.

Bevorzugte Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

In einer bevorzugten Ausführungsform werden in einem ersten Schritt Polyisocyanate (A) mit sterisch gehindertem Phenol (B), gegebenenfalls mit mindestens einer weiteren Komponente ausgewählt aus Antioxidanz (**E**), Brønsted-Säure (**F**), Additiv (**G**) und/oder Lösungsmittel (**D**) in eine Polyisocyanatzusammensetzung überführt. Insbesondere bevorzugt sind Abmischungen von Polyisocyanat (**A**) mit sterisch gehindertem Phenol (**B**) mit mindestens einem Lösungsmittel (**D**) oder mit mindestens einem Lösungsmittel (**D**) und mindestens einem Antioxidanz (**E**). Diese Gemische werden in einem zweiten Schritt durch Zufügen von Lewis-Säure (**C**), gegebenenfalls weiteren der Komponenten, insbesondere Lösungsmittel (**D**) in erfindungsgemäße Polyisocyanatzusammensetzungen überführt.

Bevorzugte Lösungsmittel für Vormischungen solch einer Polyisocyanat-Komponente im ersten Schritt sind n-Butylacetat, Ethylacetat, 1-Methoxypropylacetat-2, 2-Methoxyethylacetat, Xylol, Solvesso® 100, sowie deren Gemische.

Die erfindungsgemäßen Polyisocyanatzusammensetzungen sind beispielsweise wie folgt zusammengesetzt:
(**A**) 20 bis 99, bevorzugt 20 bis 95%, besonders bevorzugt 30 bis 90 Gew%, ganz besonders bevorzugt 40-80 Gew%,
(**B**) 100 bis 10000 Gew.ppm sterisch gehindertes Phenol, bevorzugt 200 bis 5000, besonders bevorzugt 250 bis 3000 Gew.ppm, ganz besonders bevorzugt 300 bis 1500 Gew.ppm,
(**C**) 1 bis 10000 Gew.ppm Lewis-Säure, bevorzugt 20 bis 2000 und besonders bevorzugt 50 bis 500 Gew.ppm,
(**D**) 1 bis 80, Gew% Lösungsmittel, bevorzugt 5 bis 80 Gew% Lösungsmittel, besonders bevorzugt 10-70 Gew%, ganz besonders bevorzugt 20 bis 60 Gew%,
(**E**) 0 bis 2000 ppm weitere Antioxidanzien, bevorzugt 10-600 ppm, besonders bevorzugt 50-300 ppm,
(**F**) 0 bis 1000 Gew.ppm Brønsted-Säure, bevorzugt 2 bis 300, besonders bevorzugt 10 bis 100 Gew.ppm,
(**G**) 0-5 Gew% Additive
   mit der Maßgabe, dass sich die Gew.ppm-Angaben der Komponenten (**B**), (**C**), (**E**), (**F**), und (**G**) auf Polyisocyanat (**A**) beziehen und die Summe der Komponenten (**A**) und (**D**) immer 100 Gew% beträgt.
(**H**) gegebenenfalls zusätzlich zu den obigen Komponenten (**A**) bis (**G**) noch Pigmente.
Sind Komponenten (**H**) anwesend, so werden diese nicht in die Zusammensetzung der Komponenten (**A**) bis (**G**) eingerechnet.

Die erfindungsgemäßen Polyisocyanatzusammensetzungen können mit Vorteil als Härterkomponenten zusätzlich zu mindestens einem Bindemittel in Polyurethanlacken eingesetzt werden.

Die Umsetzung mit Bindemitteln kann dabei gegebenenfalls nach einem langen Zeitraum erfolgen, der eine entsprechende Lagerung der Polyisocyanatzusammensetzung erfordert. Die Lagerung von Polyisocyanatzusammensetzung erfolgt zwar bevorzugter weise bei Raumtemperatur, kann aber auch bei höheren Temperaturen erfolgen. In der Praxis sind Erwärmung solcher Polyisocyanatzusammensetzung bei Lagerung auf 30 °C, 40 °C, selbst bis 60 °C möglich.

Bei den Bindemitteln kann es sich beispielsweise um Polyacrylatpolyole, Polyesterpolyole, Polyetherpolyole, Polyurethanpolyole; Polyharnstoffpolyole; Polyesterpolyacrylatpolyole; Polyesterpolyurethanpolyole; Polyurethanpolyacrylatpolyole, Polyurethanmodifizierte Alkydharze; Fettsäuremodifizierte Polyesterpolyurethanpolyole, Kopolymerisate mit Allylethern, Propfpolymerisate aus den genannten Stoffgruppen mit z.B. unterschiedlichen Glasübergangstemperaturen, sowie Mischungen der genannten Bindemittel handeln. Bevorzugt sind Polyacrylatpolyole, Polyesterpolyole und Polyurethanpolyole, besonders bevorzugt Polyacrylatpolyole und Polyesterpolyole.

Bevorzugte OH-Zahlen, gemessen gemäß DIN 53240-2 (potentiometrisch), sind 40-350 mg KOH/g Festharz für Polyester, bevorzugt 80-180 mg KOH/g Festharz, und 15-250 mg KOH/g Festharz für Polyacrylatole, bevorzugt 80-160 mg KOH/g.

Zusätzlich können die Bindemittel eine Säurezahl gemäß DIN EN ISO 3682 (potentiometrisch) bis 200 mg KOH/g, bevorzugt bis 150 und besonders bevorzugt bis 100 mg KOH/g aufweisen.

Polyacrylatpolyole weisen bevorzugt ein Molekulargewicht Mₙ von mindestens 500, besonders bevorzugt mindestens 1200 g/mol auf. Das Molekulargewicht Mₙ kann prinzipiell nach oben unbegrenzt sein, bevorzugt bis zu 50.000, besonders bevorzugt bis zu 20.000 g/mol, ganz besonders bevorzugt bis zu 10.000 g/mol und insbesondere bis zu 5.000 g/mol betragen.

Die hydroxyfunktionellen Monomere (siehe unten) werden in solchen Mengen bei der Kopolymerisation mitverwendet, dass die obengenannten Hydroxylzahlen der Polymere resultieren.

Dabei handelt es sich um hydroxygruppenhaltige Kopolymere aus mindestens einem hydroxygruppenhaltigen (Meth)acrylat mit mindestens einem weiteren polymerisationsfähigen Komonomer ausgewählt aus der Gruppe bestehend aus (Meth)acrylsäurealkylestern, Vinylaromaten, α, β-ungesättigten Carbonsäuren und anderen Monomeren.

Als (Meth)acrylsäurealkylestern genannt seien z.B. C₁-C₂₀-Alkyl(meth)acrylate, Vinylaromaten sind solche mit bis zu 20 C-Atomen, α,β-ungesättigte Carbonsäuren umfassen auch deren Anhydride und andere Monomere sind beispielsweise Vinylester von bis zu 20 C-Atomen enthaltenden Carbonsäuren, ethylenisch ungesättigte Nitrile, Vinylether von 1 bis 10 C-Atome enthaltenden Alkoholen und, weniger bevorzugt, aliphatische Kohlenwasserstoffe mit 2 bis 8 C-Atomen und 1 oder 2 Doppelbindungen.

Als (Meth)acrylsäurealkylester bevorzugt sind solche mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, Vinylstearat, Vinylpropionat und Vinylacetat.

α, β-Ungesättigte Carbonsäuren und deren Anhydride können beispielsweise sein: Acrylsäure, Methacrylsäure, Fumarsäure, Crotonsäure, Itaconsäure, Maleinsäure oder Maleinsäureanhydrid, bevorzugt Acrylsäure.

Als hydroxyfunktionelle Monomere seien Monoester von α,β-ungesättigten Carbonsäuren, wie Acrylsäure, Methacrylsäure (in dieser Schrift kurz als "(Meth)acrylsäure" bezeichnet), mit Di- oder Polyolen erwähnt, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-Propandiol, 2-Methyl-1,3-Propandiol, 2-Butyl-2-ethyl-1,3-Propandiol, 1,6-Hexandiol, 2-Methyl-1,5-pentandiol, 2-Ethyl-1,4-butandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Bis(hydroxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem Molekulargewicht zwischen 162 und 4500, bevorzugt 250 bis 2000, Poly-1,3-propandiol oder Polypropylenglykol mit einem Molekulargewicht zwischen 134 und 2000 oder Polyethylenglykol mit einem Molekulargewicht zwischen 238 und 2000 sein.

Bevorzugt sind 2-Hydroxyethylacrylat, 2-Hydroxyethylmethacrylat, 2- oder 3-Hydroxypropylacrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat.

Als vinylaromatische Verbindungen kommen z.B. Vinyltoluol, α-Butylstyrol, α-Methylstyrol, 4-n-Butyl-styrol, 4-n-Decylstyrol und vorzugsweise Styrol in Betracht.

Beispiele für Nitrile sind Acrylnitril und Methacrylnitril.

Geeignete Vinylether sind z.B. Vinylmethylether, Vinylisobutylether, Vinylhexylether und Vinyloctylether.

Als nicht aromatische Kohlenwasserstoffe mit 2 bis 8 C-Atomen und einer oder zwei olefinischen Doppelbindungen seien Butadien, Isopren, sowie Ethylen, Propylen und Isobutylen genannt.

Weiterhin sind N-Vinylformamid, N-Vinylpyrrolidon sowie N-Vinylcaprolactam einsetzbar, weiterhin, ethylenisch ungesättigte Säuren, insbesondere Carbonsäuren, Säureanhydride oder Säureamide, sowie Vinylimidazol. Auch Epoxidgruppen aufweisende Komonomere wie z.B. Glycidylacrylat oder -methacrylat oder Monomere wie N-Methoxymethylacrylamid oder -methacrylamid können in geringen Mengen mitverwendet werden.

Bevorzugt sind Ester der Acrylsäure bzw. der Methacrylsäure mit 1 bis 18, vorzugsweise 1 bis 8 Kohlenstoffatomen im Alkoholrest wie z.B. Methylacrylat. Ethylacrylat, Isopropylacrylat, n-Propylacrylat, n-Butylacrylat, 2-Ethylhexylacrylat, n-Stearylacrylat, die diesen Acrylaten entsprechenden Methacrylate, Styrol, alkylsubstituierte Styrole, Acrylnitril, Methacrylnitril, Vinylacetat oder Vinylstearat bzw. beliebige Gemische derartiger Monomere.

Die Hydroxygruppen tragenden Monomere werden in die Kopolymerisation der Hydroxygruppen tragenden (Meth)Acrylate im Gemisch mit anderen polymerisierbaren, bevorzugt radikalisch polymerisierbaren Monomeren, eingesetzt, bevorzugt solche, welche zu mehr als 50 Gew% aus C₁-C₂₀-, bevorzugt C₁- bis C₄-Alkyl(meth)acrylat, (Meth)acrylsäure, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymere, die neben den Hydroxygruppen tragenden Monomeren zu mehr als 60 Gew% aus C₁-C₁₀-Alkyl(meth)acrylaten, Styrol und dessen Derivaten oder deren Mischungen bestehen.

Die Herstellung der Polymerisate kann durch Polymerisation nach üblichen Verfahren durchgeführt werden. Vorzugsweise erfolgt die Herstellung der Polymerisate in einer Emulsionspolymerisation oder in organischer Lösung. Möglich sind kontinuierliche oder diskontinuierliche Polymerisationsverfahren. Von den diskontinuierlichen Verfahren sind das Batch- und das Zulaufverfahren zu nennen, wobei letzteres bevorzugt ist. Bei dem Zulaufverfahren wird das Lösungsmittel allein oder mit einem Teil des Monomergemischs vorgelegt, auf die Polymerisationstemperatur erwärmt, die Polymerisation im Fall einer Monomervorlage radikalisch gestartet und das restliche Monomergemisch zusammen mit einem Initiatorgemisch im Verlauf von 1 bis 10 Stunden, vorzugsweise 3 bis 6 Stunden, zudosiert. Optional wird anschließend noch nachaktiviert, um die Polymerisation bis zu einem Umsatz von mindestens 99 % durchzuführen.

Weitere Bindemittel sind z.B. Polyesterpolyole, wie sie durch Kondensation von Polycarbonsäuren, insbesondere Dicarbonsäuren mit Polyolen, insbesondere Diolen erhältlich sind. Um eine für die Polymerisation angemessene Funktionalität des Polyesterpolyols zu gewährleisten werden partiell auch Triole, Tetrole etc. wie auch Trisäuren, etc. eingesetzt.

Polyesterpolyole, sind z.B. aus Ullmanns Enzyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, aromatisch oder heterocyclisch sein und optional, z.B. durch Halogenatome, substituiert und/oder ungesättigt sein. Als Beispiele hierfür seien genannt:
Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Hexahydrophthalsäureanhydrid, Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 4500, bevorzugt 250 bis 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3- und 1,4-Cyclohexandimethanol, 1,2-, 1,3-oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die optional wie oben beschrieben alkoxiliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Trimethylolpropan, Glycerin, Neopentylglykol, Ethylenglykol, Butan-1,4-diol, Hexan-1,6-diol, Octan-1,8-diol und Dodecan-1,12-diol.

Ferner kommen auch Polycarbonat-Diole in Betracht, wie sie z.B. durch Umsetzung von Phosgen mit einem Überschuss von den als Aufbaukomponenten für die Polyesterpolyole genannten niedermolekularen Alkohole erhalten werden können.

Geeignet sind auch Polyesterdiole auf Lacton-Basis, wobei es sich um Homo- oder Mischpolymerisate von Lactonen, bevorzugt um endständige Hydroxygruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

In Polyurethanlacken sind Molmassen Mₙ der Polyester von 800 - 4000 g/mol üblich, wobei die hier verwendeten Polyester nicht darauf beschränkt sind.

Weiterhin sind als Bindemittel auch Polyetherole geeignet, die durch Addition von Ethylenoxid, Propylenoxid und/oder Butylenoxid, bevorzugt Ethylenoxid und/oder Propylenoxid und besonders bevorzugt Ethylenoxid an H-aktive Komponenten hergestellt werden. Ebenso sind Polykondensate aus Butandiol geeignet. In Polyurethanlacken sind Molmassen der Polyether von 500-2000 g/mol üblich, wobei die hier verwendeten Polyether nicht darauf beschränkt sind.

Die Polymere können zumindest teilweise durch sogenannte Reaktivverdünner ersetzt werden. Dabei kann es sich um blockierte sekundäre oder primäre Amine (Aldimine und Ketime) oder um Verbindungen mit sterisch gehinderten und / oder elektronenarmen sekundären Aminogruppen handeln, beispielsweise Asparaginsäureester gemäß EP 403921 oder WO 2007/39133.

Zur Härtung des Films werden Polyisocyanatzusammensetzung und Bindemittel in einem Molverhältnis von Isocyanatgruppen zu gegenüber Isocyanat reaktiven Gruppen von 0,2:1 bis 5:1, bevorzugt 0,8:1 bis 1,2:1 und speziell 0,9:1 bis 1,1:1 miteinander vermischt, wobei gegebenenfalls noch weitere lacktypische Bestandteile eingemischt werden können, und auf das Substrat aufgetragen und bei Umgebungstemperatur bis 150 °C ausgehärtet.

Das Lackgemisch wird bevorzugt bei einer Temperatur zwischen Raumtemperatur und 140 °C ausgehärtet.
In einer besonders bevorzugten Variante wird das Lackgemisch bei Umgebungstemperatur bis 80 °C, besonders bevorzugt bis 60 °C, ganz besonders bevorzugt bis 40 °C ausgehärtet. Die Härtung kann auch mit Infrarotstrahlung erfolgen. Bevorzugt handelt es sich dabei um solche Gegenstände, die nicht bei hohen Temperaturen gehärtet werden können, wie große Maschinen, Flugzeuge, Großraumfahrzeuge und Refinish-Anwendungen, gegebenenfalls Kunststoffe.

In einer anderen bevorzugten Anwendung wird das Lackgemisch bei 110-140 °C ausgehärtet (z.B. für OEM-Anwendungen).

Unter "Härtung" wird im Rahmen der vorliegenden Erfindung das Erzeugen einer klebfreien Beschichtung auf einem Substrat verstanden, indem man die auf das Substrat aufgetragene Beschichtungsmasse zumindest solange auf die oben angegebene Temperatur erwärmt, bis mindestens die gewünschte Klebfreiheit eingetreten ist.

Unter einer Beschichtungsmasse wird im Rahmen der vorliegenden Schrift eine Mischung zumindest der Komponenten verstanden, die zum Beschichten mindestens eines Substrats zum Zwecke einer Ausbildung eines Films und, nach Härtung, einer klebfreien Beschichtung vorgesehen ist.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die optional enthaltenen flüchtigen Bestandteile der Beschichtungsmasse, optional unter Erhitzen, entfernt. Dieser Vorgang kann gewünschten falls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Koextrudieren erfolgen.

Die Dicke einer solchen zu härtenden Schicht kann von 0,1 µm bis mehrere mm betragen, bevorzugt von 1 bis 2.000 µm, besonders bevorzugt 5 bis 200 µm, ganz besonders bevorzugt von 5 bis 60 µm, insbesondere 20 bis 50 µm (bezogen auf den Lack im Zustand in dem das Lösungsmittel aus dem Lack entfernt ist).

Weiterhin sind auch Substrate, beschichtet mit einer erfindungsgemäßen Mehrschichtlackierung Gegenstand der vorliegenden Erfindung.

Besonders geeignet sind solche Polyurethanlacke für Anwendungen, in denen eine besonders hohe Applikationssicherheit, Außenwitterungsbeständigkeit, Optik, Lösemittel-, Chemikalien- und Wasserfestigkeit gefordert werden.

Die erhaltenen zweikomponentigen Beschichtungsmassen und Lackformulierungen eignen sich zum Beschichten von Substraten wie Holz, Holzfurnier, Papier, Pappe, Karton, Textil, Folie, Leder, Vlies, Kunststoffoberflächen, Glas, Keramik, mineralischen Baustoffen, wie Zement-Formsteine und Faserzementplatten oder Metallen, die jeweils optional vorbeschichtet bzw. vorbehandelt sein können, bevorzugt Metallen, vorbeschichteten Oberflächen und Kunststoffen.

Derartige Beschichtungsmassen eignen sich als oder in Innen- oder Außenbeschichtungen, also solche Anwendungen, die dem Tageslicht ausgesetzt sind, bevorzugt von Gebäudeteilen, Beschichtungen auf (Groß-)Fahrzeugen und Flugzeugen und industriellen Anwendungen, Nutzfahrzeuge im landwirtschaftlichen und Baubereich (ACE), Dekolackierungen, Brücken, Gebäuden, Strommasten, Tanks, Containern, Pipelines, Kraftwerken, chemischen Anlagen, Schiffen, Kränen, Pfählen, Spundwänden, Armaturen, Rohren, Fittings, Flanschen, Kupplungen, Hallen, Dächern und Baustahl, Möbeln, Fenstern, Türen, Parkett, Can-Coating und Coil-Coating, für Bodenbeläge, wie bei Parkdecks oder in Krankenhäusern, in Automobillacken als OEM und Refinish-Anwendung, besonders bevorzugt Refinish und Industrieanwendungen.

Insbesondere werden die erfindungsgemäßen Beschichtungsmassen als Klar-, Basis-und Decklacke(n), Topcoats, Primern und Füllern eingesetzt, bevorzugt als Klarlacke.

Derartige Polyisocyanatzusammensetzungen können als Härter in Lacken, Klebstoffen und Dichtungsmassen eingesetzt werden, bevorzugt werden sie in Lacken eingesetzt.

Es stellt einen Vorteil der erfindungsgemäßen Polyisocyanatzusammensetzungen dar, dass sie Polyisocyanatmischungen in Gegenwart von Urethanisierungskatalysatoren über einen langen Zeitraum farbstabil halten.

### Beispiele

### Einsatzstoffe:

### Mengenangaben in ppm sind generell Gew.ppm

**Polyisocyanat A:** Isocyanurat auf Basis Hexamethylendiisocyanat: Hexamethylendiisocyanat HDI wurde in Anwesenheit von 60 ppm Benzyltrimethylammoniumhydroxyisobutyrat als Katalysator bezogen auf Hexamethylendiisocyanat, 5%-ig in Ethylhexanol in einer Kaskade bestehend aus drei Reaktoren mit je 40 min mittlerer Durchsatzzeit bei 120 °C umgesetzt. Die Reaktion wurde in einem statischen Mischer mit 22 % Di-(2-ethyl-hexyl)-phosphat, stöchiometrisch bezogen auf den Katalysator, 10%-ig gelöst in Hexamethylendiisocyanat, gestoppt. Hexamethylendiisocyanat wurde über mehrere Destillationsstufen abdestilliert. NCO-Gehalt des Produkts: 22,2 %, Farbzahl 19 Hz; Viskosität: 2630 mPa*s.

### Sterisch gehinderte Phenole B:

### Erfindungsgemäß:

Phenol B1: Polyethylenglykol-bis-[3-(3,5-di-tert-butyl-4-hydroxyphenyl)-propionat] mit einem zahlenmittleren Molekulargewicht Mₙ von 978 g/mol und einem Schmelzpunkt von -2 °C:
500 g Polyethylenglykol (Mw = 201,8 g/mol, 2,5 mol) wurden mit 1310 g 3-(3,5 Ditert.-butyl-4-hydroxphenyl)-propionsäuremethylester (292,4 g/mol; 5 mol) sowie 500 ppm Dibutylzinndilaurat in einen 300-ml-Kolben gegeben. Es wurde auf 170°C erhitzt. Durch die Lösung wurde vorsichtig Stickstoff geleitet. Das entstehende Methanol wurde in einem Liebig-Kühler auskondensiert. Nach 18 h wurde die Reaktion beendet. Analyse mittels GPC bestätigt den vollständigen Umsatz der Ausgangskomponenten.

Das zahlenmittlere Molekulargewicht Mₙ wurde bestimmt durch Gelpermeationschromatographie gegenüber Polystyrol-Standard in Tetrahydrofuran bei (23 ± 1) °C. Weitere Messbedingungen sind nachfolgend gegeben:
Injektor: Autosampler WATERS 717 Plus
Eluent: Tetrahydrofuran (Flussrate: 1 ml/min)
Pumpe: WATERS Modell 515 (Doppelkolbenpumpe)
Detektor 1: UV-Detektor WATERS 2489 (Wellenlänge: 254 nm)
Detektor 2: Differentialrefraktometer WATERS 2414 (Messtemperatur: 35°C)
Säulensatz: PL-Gel-Säulen (300x7,5 mm), 4 Säulen in Reihe geschaltet: Säulenmaterial: vernetzte Polystyrol-Divinylbenzol-Matrix, Teilchengröße 5 µm: Porenweite: 2 x 500 Å; 1 x 1000 Å, 1 x 10000 Å
Kalibration: Polystyrolstandard, Molmassenbereich 450000 - 312 g/mol
Software: PSS WinGPC Unity NT

### Nicht erfindungsgemäß (Vergleich):

Phenol B2: C7-C9-verzweigter Alkylester-3-(3,5-di-tert-butyl-4-hydroxyphenyl)-propionat (Irganox® 1135 der BASF SE)
Phenol B3: 2,6-Di-tert-butyl-4-methyl-phenol (BHT)
**Katalysator C**: Dibutylzinndilaurat (DBTL, DBTDL)

### Lösungsmittel D:

**D1**: Solvent Naphtha (Solvesso® 100, Siedebereich ca. 170-180 °C)
**D2**: Methylethylketon

### Antioxidanz E:

**E1**: Dioctylphosphonat (Irgafos® OPH der BASF SE)
**E2**: Triphenylphosphit (Tppt, Aldrich)

An die Phenole (**B**) werden diverse Anforderungen gestellt:
Sie sollen innerhalb normaler Prozesszeiten in einer Produktion gut in reinem Polyisocyanat (**A**) löslich sein. Löslichkeiten von Phenol (**B**) in Polyisocyanat (**A**) wurden mit 1 und 10 % Phenol (**B**) in dem handelsüblichen Polyisocyanurat Basonat® HI 100 bestimmt indem eine Probe auf einem Roller mit einer Geschwindigkeit von 35 Umdrehungen / min bei Raumtemperatur gerollt wurde. Für eine gute Einarbeitbarkeit wurde festgelegt, dass sich das Phenol (**B**) in mindestens 10 % in 30 Minuten bei Zimmertemperatur lösen muss, um bei einer industriellen Einarbeitung keine technischen Probleme hervorzurufen.

Lagerstabilitäten von Mischungen der Polyisocyanate (**A**), Lewis-Säuren (**C**), Lösungsmitteln (**D**), insbesondere enthaltend Solvesso® 100 und/oder Ketone, und erfindungsgemäße Phenole (**B**) sollen bezüglich Farbdrift gleich oder besser einem Stand der Technik sein.
Lagerversuche erfolgten in fest verschlossenen Schraubdeckelgefäßen unter Stickstoff. Spuren von Luft sind nicht ausgeschlossen. Die Untersuchungen erfolgten mit 25 g in 25 mL-Gefäßen bei 50 °C im Umluftofen. Die Farbzahlen wurden vor Beginn der Lagerungen, sowie Lagerung nach unterschiedlichen Zeiträumen gemessen. Nach einer Farbmessung wurden die Materialien wieder in die Schraubdeckelgefäße zurückgegeben und durch Überspülen mit Stickstoff inertisiert.
Die Gew.-%-Angaben beziehen sich auf 100 % Gesamtgewicht bezogen auf Polyisocyanat (**A**) und Lösungsmittel (**D**). Die Konzentrationen der Verbindungen (**B**), (**C**), (**E**) in ppm beziehen sich im jeweils unverdünnten Zustand der Verbindungen (**B**), (**C**), (**E**) auf die Gesamtmenge Polyisocyanat (**A**).
Die Farbzahlmessung erfolgte in APHA nach DIN EN 1557 auf einem Lico 150 der Firma Lange in einer 5 cm Messküvette mit einem Volumen von 5 mL.

Das zahlenmittlere Molekulargewicht Mₙ der Phenole (**B**) sollte über 650 D liegen, um das Fogging zu reduzieren.

Die Phenole (**B**) sollten bei Raumtemperatur flüssig, und damit gut industriell handhabbar und in Polyisocyanat einarbeitbar sein. Bevorzugt ist ein Schmelzpunkt unter 5 °C.

Toxikologisch sollten die Produkte keine Kennzeichnung aufweisen.

**Testreihe 1: In der nachfolgenden Tabelle steht ein erfindungsgemäßes Phenol (B1) zwei nicht erfindungsgemäßen Phenolen mit ihren Löslichkeiten in einem handelsüblichen Polyisocyanat (Basonat® HI 100), den zahlenmittleren Molekulargewichten Mₙ und Schmelzpunkten gegenüber**

| | **Phenol B** | **Löslichkeit** | **Zahlenmittleres Molekulargewicht Mₙ [D]** | **Schmelzpunkt [°C]** |
|---|---|---|---|---|
| Bsp. | **B1** | [++] 10% 30' Roller RT | 978 | (-2) |
| Vgl. | **B2** | [++] 10% 20' Roller RT | 399 | < (-30) |
| Vgl. | **B3** | [-]10% 24 h Roller RT [-] 10% 30' 80 °C | 220 | 69 |

Phenol **B1** ist erfindungsgemäß, mit einem Schmelzpunkt von -2 °C flüssig, nicht kennzeichnungspflichtig und gut in Polyisocyanat löslich.

Von den Vergleichs-Phenolen erfüllt das Isooctyl-3-(3,5-di-tert-butyl-4-hydroxyphenyl)-propionat **B2** die Anforderungen an eine gute Löslichkeit und Einarbeitbarkeit. Es ist aber toxikologisch nicht bevorzugt und hat ein Molekulargewicht von unter 400 g/mol, und von daher ein stärkeres Fogging.
Das andere nicht erfindungsgemäße Phenole **B3** ist schlecht löslich, fest, besitzt ein niedrigeres Molekulargewicht und toxikologisch unerwünschte Eigenschaften.

**Testreihe 2: Lagerung von 50 Gew% Polyisocyanat A mit erfindungsgemäßem und nicht erfindungsgemäßem Additiv (B) in stöchiometrisch gleicher Menge, 1000 ppm Lewis-Säure DBTL (C), 50 Gew% Lösungsmittel Solvesso^{®} 100 (D1) bei 50 °C mit Angabe der Farbzahlen.**

| **Beispiele** | **Phenol** | **Phenol** | **Phenol** | **Antioxidanz** | **Lagerzeit** | | | |
|---|---|---|---|---|---|---|---|---|
| | **[Mikromol/kg]** | **[Gew ppm]** | **(B)** | **(E) [ppm]** | **0** | **23 d** | **70 d** | **105 d** |
| Bsp. 1 | 0,5 | 360 | B1 | 200 E1 | **13** | **78** | **141** | **176** |
| Vgl. 1 | 0,5 | 200 | B2 | 200 E1 | **13** | **83** | **148** | **187** |

Das Beispiel ist im Farbdrift besser als die Referenz.

**Testreihe 3: Lagerung von 50 Gew% Polyisocyanat A mit erfindungsgemäßem und nicht erfindungsgemäßen Additiven (B) in stöchiometrisch gleicher Menge, 1000 ppm Lewis-Säure DBTL (C), 50 Gew% Lösungsmittel Methylamylketon (D2) bei 50 °C mit Angabe der Farbzahlen.**

| **Beispiele** | **Phenol** | **Phenol** | **Phenol** | **Antioxidanz** | **Lagerzeit** | | | |
|---|---|---|---|---|---|---|---|---|
| | **[Mikromol/kg]** | **[Gew ppm]** | **(B)** | **(E) [ppm]** | **0 d** | **23 d** | **70 d** | **105 d** |
| Bsp. 2 | 0,5 | 360 | B1 | | **18** | **37** | **65** | **89** |
| Vgl. 2 | 0,5 | 200 | B2 | | **18** | **55** | **82** | **117** |
| Bsp. 3 | 0,5 | 360 | B1 | 200 E2 | **17** | **35** | **34** | **43** |
| Vgl. 3 | 0,5 | 200 | B2 | 200 E2 | **17** | **52** | **97** | **133** |
| Vgl. 4 | 0,5 | 110 | B3 | 200 E2 | **17** | **37** | **39** | **59** |
| Bsp. 4 | 0,5 | 360 | B1 | 200 E1 | **17** | **32** | **45** | **80** |
| Vgl. 5 | 0,5 | 200 | B2 | 200 E1 | **17** | **57** | **97** | **121** |

Die Beispiele sind im Farbdrift besser als die Referenz.

**Testreihe 4: Lagerung von 50 Gew% Polyisocyanat A in erfindungsgemäßen und nicht erfindungsgemäßen Additiven (B) in stöchiometrisch gleicher Menge, alle nicht erfindungsgemäß in Abwesenheit von Lewis-Säure DBTL (C), in Anwesenheit von 50 Gew% Lösungsmittel Solvesso^{®} 100 (D1) bei 50 °C mit Angabe der Farbzahlen (Muster wie in Testreihe 2)**

| **Beispiele** | **Phenol** | **Phenol** | **Phenol** | **Antioxidanz** | **Lagerzeit** | | | |
|---|---|---|---|---|---|---|---|---|
| | **[Mikromol/kg]** | **[Gew ppm]** | **(B)** | **(E) [ppm]** | **0 d** | **23 d** | **70 d** | **105 d** |
| Vgl. 6 | 0,5 | 360 | B1 | 200 E1 | **12** | **22** | **18** | **18** |
| Vgl. 7 | 0,5 | 200 | B2 | 200 E1 | **12** | **16** | **15** | **23** |

Der Farbdrift in Abwesenheit von DBTL ist marginal. Die Farbzahlunterschiede nach Lagerungen sind in der Größenordnung der Messfehler. Der Farbzahldrift in Abwesenheit von Lewis-Säure ist unter den Lagerbedingungen nicht relevant.

**Testreihe 5: Lagerung von 50 Gew% Polyisocyanat A mit erfindungsgemäßem und nicht erfindungsgemäßen Additiven (B) in stöchiometrisch gleicher Menge, alle nicht erfindungsgemäß in Abwesenheit von Lewis-Säure DBTL (C), in Anwesenheit von 50 Gew% Lösungsmittel Methylamylketon (D2) bei 50 °C mit Angabe der Farbzahlen (Muster wie in Testreihe 3).**

| **Beispiele** | **Phenol** | **Phenol** | **Phenol** | **Antioxidanz** | **Lagerzeit** | | | |
|---|---|---|---|---|---|---|---|---|
| | **[Mikromol/kg]** | **[Gew ppm]** | **(B)** | **(E) [ppm]** | **0 d** | **23 d** | **70 d** | **105 d** |
| Vgl. 8 | 0,5 | 360 | B1 | | **11** | **30** | **26** | **28** |
| Vgl. 9 | 0,5 | 200 | B2 | | **11** | **26** | **25** | **27** |
| Vgl.10 | 0,5 | 360 | B1 | 200 E2 | **11** | **19** | **25** | **26** |
| Vgl. 11 | 0,5 | 200 | B2 | 200 E2 | **11** | **22** | **23** | **23** |
| Vgl. 12 | 0,5 | 110 | B3 | 200 E2 | **11** | **22** | **24** | **26** |
| Vgl. 13 | 0,5 | 360 | B1 | 200 E1 | **11** | **29** | **31** | **34** |
| Vgl. 14 | 0,5 | 200 | B2 | 200 E1 | **11** | **33** | **36** | **43** |

Der Farbzahldrift in Abwesenheit von Lewis-Säure ist unter den Lagerbedingungen nicht relevant. Der Farbdrift in Abwesenheit von DBTL ist marginal. Die Farbzahlunterschiede nach Lagerungen sind i.A. in der Größenordnung der Messfehler.

Da (**B1**) in Bezug auf die Phenol-Gruppen ein höheres Äquivalentgewicht aufweist als Irganox® 1135 (**B2**) und BHT (**B3**) wurde das Härtungsverhalten und Anwendungstechnik auf weichmachende Wirkung untersucht. Es wurde kein negativer Einfluss gefunden.

## Patentansprüche

1. Polyisocyanatzusammensetzungen, enthaltend
- (**A**) mindestens ein (cyclo)aliphatisches Polyisocyanat, erhältlich durch Umsetzung mindestens eines monomeren Isocyanats,
- (**B**) mindestens ein sterisch gehindertes Phenol mit einem Schmelzpunkt von unter 40 °C und einem zahlenmittleren Molekulargewicht Mₙ zwischen 650 und 2550 g/mol, enthaltend mindestens zwei phenolische Gruppen
- (**C**) mindestens eine Lewis-saure organische Metallverbindung, die die Umsetzung von Isocyanatgruppen mit gegenüber Isocyanat reaktiven Gruppen zu beschleunigen vermag,
- (**D**) mindestens ein Lösungsmittel,
- (**E**) gegebenenfalls mindestens eine weiteres Antioxidanz,
- (**F**) gegebenenfalls mindestens eine Brønsted-Säure mit einem pKs-Wert kleiner 4,
- (**G**) gegebenenfalls andere lacktypische Additive.

2. Polyisocyanatzusammensetzungen gemäß Anspruch 1, **dadurch gekennzeichnet, dass** es sich bei dem monomeren Isocyanat um ein Diisocyanat handelt, ausgewählt aus der Gruppe bestehend aus 1,6-Hexamethylendiisocyanat, 1,5-Pentamethylendiisocyanat, Isophorondiisocyanat, 1,3-Bis(isocyanatomethyl)cyclo-hexan, 4,4'- Di-(isocyanatocyclohexyl)-methan und 2,4'-Di-(isocyanatocyclohexyl)-methan.

3. Polyisocyanatzusammensetzungen gemäß Anspruch 1 oder 2, **dadurch gekennzeichnet, dass** das Polyisocyanat (A) Isocyanurat-, Biuret-, Allophanat-, Urethangruppen, Uretdion und/oder Iminooxadiazindiongruppen aufweist.

4. Polyisocyanatzusammensetzungen gemäß einem der vorhergehenden Ansprüche, dass das Polyisocyanat (A) einen NCO Gehalt im Bereich von 5 bis 25 Gew.-% aufweist.

5. Polyisocyanatzusammensetzungen gemäß einem der vorhergehenden Ansprüche, **dadurch gekennzeichnet, dass** das Polyisocyanat (A) Isocyanurat-, und oder Allophanat-/Urethangruppen enthält, die unter Verwendung eines Ammoniumcarboxylat-, Ammoniumhydroxycarboxylat- oder Ammoniumhydroxid-Katalysators hergestellt wurden.

6. Polyisocyanatzusammensetzungen gemäß einem der vorhergehenden Ansprüche, **dadurch gekennzeichnet, dass** es sich bei dem Polyisocyanat um ein vornehmlich Isocyanuratgruppen enthaltendes Polyisocyanat, mit einer Viskosität von 500-4000 mPa*s, und/oder ein niederviskoses Allophanat gegebenenfalls enthaltend Isocyanurat und/oder Urethan mit einer Viskosität von 150-1600 mPa*s und/oder ein Iminooxadiazindion gegebenenfalls enthaltend Isocyanurat mit einer Viskosität von 300-1200 mPa*s handelt.

7. Polyisocyanatzusammensetzungen gemäß einem der vorhergehenden Ansprüche, **dadurch gekennzeichnet, dass** Verbindung (**B**) pro aromatischem Ring genau eine phenolische Hydroxygruppe aufweist und in der beide ortho-Positionen bezogen auf die phenolische Hydroxygruppe mit Alkyl-Resten substituiert sind, bevorzugt mit C₁-C₁₀Alkyl, besonders bevorzugt mit C₄-C₆ Alkyl, ganz besonders bevorzugt mit sec.-Butyl, tert-Butyl oder tert-Amyl, und insbesondere in beiden ortho-Positionen mit tert-Butyl.

8. Polyisocyanatzusammensetzungen gemäß einem der vorhergehenden Ansprüche, **dadurch gekennzeichnet, dass** Verbindung (B) folgende Struktur eines Polyalkylenoxid-bis-/tri oder -/tetra-[3-(3,5-di-alkyl-4-hydroxyphenyl)-propionat] aufweist, 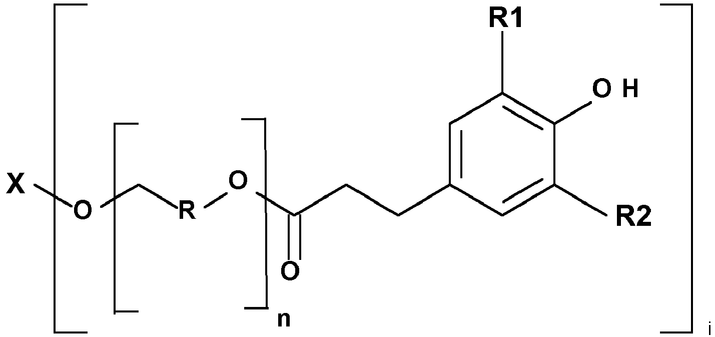 wobei
**R** ein gegebenenfalls substituierter C₁-C₅-Alkylrest ist, der linear oder verzweigt ist und von Repetiereinheit [-CH₂-R-O-] zu Repetiereinheit [-CH₂-R-O-] unterschiedlich sein kann, bevorzugt ausgewählt aus R = -CH₂-, -(CH₂)₂, - CH(CH₃)- und -(CH₂)₃-, besonders bevorzugt mit R in jeder Repetiereinheit gleich, insbesondere bevorzugt mit R = -CH₂- oder ausgewählt aus -(CH₂)₂-und -CH(CH₃)- oder ausgewählt aus -CH₂-, -(CH₂)₂- und -CH(CH₃)-;
i eine ganze Zahl zwischen 2 und 4 ist;
n eine natürliche Zahl (inklusive 0) ist, wobei die 2, 3 oder 4 n pro Verbindung (B) gleich oder verschieden seien können, und wobei die Summe der 2, 3 oder 4 n, in der Verbindung (B) im Mittel über alle Moleküle (B) größer als 2 und maximal 45 ist;
**R1**, **R2** gleiche oder verschiedene Alkylgruppen sind, bevorzugt C₁-C₁₀ Alkylgruppen, besonders bevorzugt C₄-C₆ Alkylgruppen, ganz besonders bevorzugt sec.-Butylgruppen, tert-Butylgruppen oder tert-Amylgruppen, und insbesondere tert-Butylgruppen, wobei die 2, 3 oder 4 R1 und R2 pro Verbindung (B) gleich oder verschieden sein können
und
**X** ein aliphatischer di-, tri- oder tetrafunktioneller aliphatischer linearer oder verzweigter Rest ist.

9. Polyisocyanatzusammensetzungen gemäß einem der vorhergehenden Ansprüche, **dadurch gekennzeichnet**, das Verbindung (B) folgende Struktur eines Polyalkylenoxid-bis-[3-(3,5-alkyl-4-hydroxyphenyl)-propionat] aufweist, 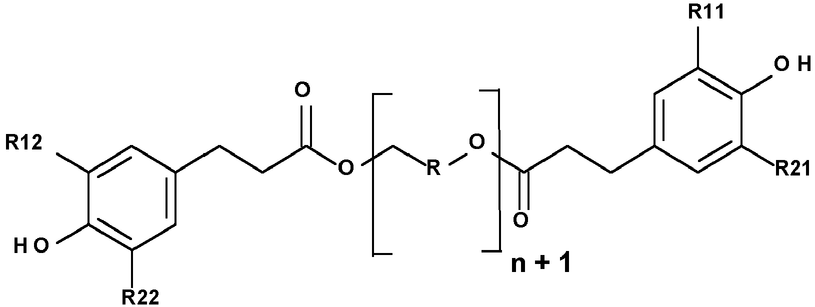 wobei
R ein gegebenenfalls substituierter C₁-C₅-Alkylrest ist, der linear oder verzweigt ist und von Repetiereinheit [-CH₂-R-O-] zu Repetiereinheit [-CH₂-R-O-] unterschiedlich sein kann, bevorzugt ausgewählt aus R = -CH₂-, -(CH₂)₂, - CH(CH₃)-, und -(CH₂)₃- (letzteres abgeleitet von Poly-THF, insbesondere einer Molmasse von ca. 250, 650, 1000, 1800 oder 2000 g/mol), besonders bevorzugt mit R in jeder Repetiereinheit gleich, insbesondere bevorzugt mit R = - CH₂- oder ausgewählt aus -(CH₂)₂- und -CH(CH₃)- oder ausgewählt aus -CH₂-, -(CH₂)₂- oder -CH(CH₃)-;
**n** eine natürliche Zahl ist, wobei (n + 1) in der Verbindung (**B**) im Mittel über alle Moleküle (**B**) größer als 3 und maximal 46 ist;
und
**R11**, **R21**, **R12 und R22** gleiche oder verschiedene Alkylgruppen sind, bevorzugt C₁-C₁₀ Alkylgruppen, besonders bevorzugt C₄-C₆ Alkylgruppen, ganz besonders bevorzugt sec.-Butylgruppen, tert-Butylgruppen oder tert-Amylgruppen, und insbesondere tert-Butylgruppen.

10. Polyisocyanatzusammensetzungen gemäß einem der vorhergehenden Ansprüche, **dadurch gekennzeichnet, dass** die Lewis-saure organische Metallverbindung (**C**) ein Metall enthält, ausgewählt aus der Gruppe bestehend aus Zinn, Zink, Titan, Zirkon, und Wismut, oder Mischungen solcher Verbindungen.

11. Polyisocyanatzusammensetzungen gemäß einem der vorhergehenden Ansprüche, **dadurch gekennzeichnet, dass** das Lösungsmittel (**D**) ausgewählt ist aus der Gruppe bestehend aus aromatischen Kohlenwasserstoffen, (cyc-lo)aliphatischen Kohlenwasserstoffen, Ketonen, Estern, Ether, Etherestern und Carbonaten, insbesondere aus Destillationsschnitten aromatischer Kohlenwasserstoffe mit überwiegend C₉ und C₁₀-Aromaten, und aus Dialkylketonen, oder deren Mischungen.

12. Polyisocyanatzusammensetzungen gemäß einem der vorhergehenden Ansprüche, **dadurch gekennzeichnet, dass** das Antioxidanz (E) ausgewählt ist aus der Gruppe der Phosphite, Phosphonite, Phosphonate und Thioether.

13. Verfahren zur Stabilisierung von Polyisocyanatzusammensetzungen, die mindestens ein Polyisocyanat (A) enthalten, **dadurch gekennzeichnet dass** man der Polyisocyanatzusammensetzung zusätzlich mindestens ein sterisch gehindertes Phenol (B) mit einem Schmelzpunkt von unter 40 °C und einem zahlenmittleren Molekulargewicht zwischen 650 und 2550 g/mol, enthaltend mindestens zwei phenolische Gruppen, sowie mindestens eine Lewis-saure organische Metallverbindung (**C**), die die Umsetzung von Isocyanatgruppen mit gegenüber Isocyanat reaktiven Gruppen zu beschleunigen vermag, mindestens ein Lösungsmittel (**D**), gegebenenfalls mindestens eine weiteres Antioxidanz (**E**), gegebenenfalls mindestens eine Brønsted-Säure mit einem pKs-Wert kleiner 4 (**F**), und gegebenenfalls andere lacktypische Additive (**G**) beimengt.

14. Verfahren zur Herstellung von Polyurethanlacken, **dadurch gekennzeichnet, dass** man eine Polyisocyanatzusammensetzung gemäß einem der Ansprüche 1 bis 12 mit mindestens einem Bindemittel umsetzt, welches gegenüber Isocyanat reaktive Gruppen enthält.

15. Verfahren zur Herstellung von Polyurethanlacken, **dadurch gekennzeichnet, dass** man eine Polyisocyanatzusammensetzung gemäß einem der Ansprüche 1 bis 12 mit mindestens einem Bindemittel ausgewählt aus der Gruppe bestehend aus Polyacrylatpolyolen, Polyesterpolyolen, Polyetherpolyolen, Polyurethanpolyolen, Polyharnstoffpolyolen, Polyetherolen, Polycarbonaten, Polyesterpolyacrylatpolyolen, Polyesterpolyurethanpolyolen, Polyurethanpolyacrylatpolyolen, Polyurethanmodifizierten Alkydharzen, Fettsäuremodifizierten Polyesterpolyurethanpolyolen, Kopolymerisaten mit Allylethern und Co- bzw. Pfropfpolymerisaten aus den genannten Stoffgruppen umsetzt, bevorzugt sind Polyacrylatpolyole und/oder Polyesterpolyole.

16. Verwendung von Polyisocyanatzusammensetzungen gemäß einem der Ansprüche 1 bis 12 als Härter in Beschichtungsmitteln in Grundierungen, Füllern, pigmentierten Decklacken, Basislacken und Klarlacken im Bereich Refinish, Autoreparatur-, Automobil, Großfahrzeug- und Holzlackierung, sowie als Härter in Lacken, Klebstoffen und Dichtungsmassen.
